(19) Europäisches Patentamt
European Patent Office
Office européen des brevets

(11) **EP 4 641 169 A1**

(12) **EUROPEAN PATENT APPLICATION**

(43) Date of publication:
**29.10.2025  Bulletin 2025/44**

(21) Application number: **25171584.3**

(22) Date of filing: **22.04.2025**

(51) International Patent Classification (IPC):
**G01N 15/1429** (2024.01)    **G01N 15/1434** (2024.01)
**G01N 15/14** (2024.01)    **G01N 15/149** (2024.01)
**G01N 15/10** (2024.01)

(52) Cooperative Patent Classification (CPC):
**G01N 15/1429; G01N 15/1434; G01N 15/1459;
G01N 15/149;** G01N 2015/1006; G01N 2015/1438;
G01N 2015/1497

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.04.2024  JP 2024073126**

(71) Applicant: **SYSMEX CORPORATION
Kobe-shi
Hyogo 651-0073 (JP)**

(72) Inventors:
• **KUWANA, Takuya
Kobe-shi, Hyogo, 651-0073 (JP)**
• **YAMADA, Kazuhiro
Kobe-shi, Hyogo, 651-0073 (JP)**
• **HAYASHI, Tomoya
Kobe-shi, Hyogo, 651-0073 (JP)**
• **SUGIYAMA, Takeshi
Kobe-shi, Hyogo, 651-0073 (JP)**

(74) Representative: **Hoffmann Eitle
Patent- und Rechtsanwälte PartmbB
Arabellastraße 30
81925 München (DE)**

(54) **SAMPLE ANALYZER**

(57)    Disclosed is a sample analyzer that analyzes cells in a sample collected from a subject includes a first measurement unit configured to interrogate cells passing through at least one beam spot of a first illumination light to obtain first light information, a second measurement unit configured to interrogate cells passing through an irradiation area of a second illumination light to obtain second light information, wherein the second illumination light includes a plurality of distributed lights generated by diffracting a light using a diffractive optical element, and a controller configured to generate a cell analysis result based on one of (1) a first analysis result based on the first light information, (2) a second analysis result based on the second light information, and (3) the first analysis result and the second analysis result.

FIG. 11

EP 4 641 169 A1

**Description**

CROSS REFERENCE TO RELATED APPLICATIONS

This application claims priority from prior Japanese Patent Application No. 2024-073126, filed on April 26, 2024, entitled "Sample analyzer and sample analysis method" , the entire content of which is incorporated herein by reference.

FIELD OF THE INVENTION

The present invention relates to a sample analyzer.

BACKGROUND OF THE INVENTION

In the hematology test, classification and counting of cells in a sample are performed using a blood cell counter. U.S. Patent Application Publication No.2021/0164885 discloses a technology for classifying and counting cells. The technology disclosed in U.S. Patent Application Publication No.2021/0164885 are based on a particular principle. In the principle, light is applied to a flow cell and light information obtained by passing cells in the flow cell through a beam spot of the applied light is measured.

In the technology disclosed in U.S. Patent Application Publication No.2021/0164885, a result of classification and counting of cells is generated by measurement according to the particular measurement principle. The problem is that the accuracy of the results of cell classification and counting depends on the particular measurement principle..

In view of such problems, it is an object of the present invention to provide a sam ple analyzer and a sample analysis method capable of providing a test result that does not rely solely on a particular measurement principle.

SUMMARY OF THE INVENTION

The scope of the present invention is defined solely by the appended claims, and is not affected to any degree by the statements within this summary.

The sample analyzer (1) of the present invention relates to a sample analyzer for analyzing cells in a sample collected from a subject. The sample analyzer (1) includes: a first measurement unit (100,400) configured to interrogate cells passing through at least one beam spot (BS) of a first illumination light to obtain first light information; a second measurement unit (200,400) configured to interrogate cells passing through an irradiation area (R) of a second illumination light to obtain second light information of, wherein the second illumination light includes a plurality of distributed lights generated by diffracting the light using the diffractive optical element (215); and a controller (31) configured to generate a cell analysis result based on one of (1) a first analysis result based on the first light information, (2) a second analysis result based on the second light information, and (3) the first analysis result and the second analysis result.

[Effect of the Invention]

According to the present invention, it is possible to provide a test result which does not rely solely on a particular measurement principle.

BRIEF DESCRIPTION OF THE DRAWINGS

[FIG. 1] FIG.1 is a diagram of Embodiment 1. FIG. 1 is a front view schematically showing a configuration of a sample analyzer.
[FIG.2] FIG.2 is a diagram of Embodiment 1. FIG.2 is a block diagram showing a functional configuration of a first measurement unit.
[FIG.3] FIG.3 is a diagram of Embodiment 1. FIG.3 is a block diagram showing a functional configuration of a sample preparator of the first measurement unit.
[FIG.4] FIG.4 is a diagram of Embodiment 1. FIG.4 schematically shows a configuration of an optical detector of the first measurement unit.
[FIG.5] FIG.5 is a diagram of Embodiment 1. FIG.5 is a side view schematically showing a configuration of a flow cell of the first measurement unit.
[FIG.6] FIG.6 is a diagram of Embodiment 1. FIG.6 is a block diagram showing a functional configuration of a second measurement unit.

[FIG.7] FIG.7 is a diagram of Embodiment 1. FIG.7 is a block diagram showing a functional configuration of a sample preparator of the second measurement unit.

[FIG.8] FIG.8 is a diagram of Embodiment 1. FIG.8 schematically shows a configuration of an optical detector of the second measurement unit.

[FIG.9] FIG.9 is a diagram of Embodiment 1. FIG.9 schematically shows a flow cell and a second illumination light of the second measurement unit.

[FIG.10] FIG.10 is a diagram of Embodiment 1. FIG.10 schematically shows a distribution pattern of diffracted lights included in the second illumination light.

[FIG.11] FIG.11 is a diagram of Embodiment 1. FIG.11 is a block diagram showing a functional configuration of a controller.

[FIG.12] FIG.12 is a diagram of Embodiment 1. The upper part of FIG.12 shows a scattergram based on first light information. The lower part of FIG.12 schematically shows grouping of cell populations.

[FIG.13] FIG.13 is a diagram of Embodiment 1. The upper part of FIG.13 is a schematic diagram showing a pre-trained AI algorithm. The lower part of FIG.13 is a schematic diagram showing the trained AI algorithm.

[FIG.14] FIG.14 is a diagram of Embodiment 1. FIG.14 is a flowchart showing a control process regarding a measurement by the controller.

[FIG.15] FIG.15 is a diagram of Embodiment 1. FIG.15 is a flowchart showing a first measurement process.

[FIG.16] FIG.16 is a diagram of Embodiment 1. FIG.16 is a flowchart showing a second measurement process.

[FIG.17] FIG.17 is a diagram of Embodiment 1. FIG.17 schematically shows a configuration of a cell analysis result screen.

[FIG.18] FIG.18 is a diagram of Embodiment 1. FIG.18 schematically shows a configuration of a cell analysis result screen in a case where the second measurement process is not performed.

[FIG. 19] FIG.19 is a diagram of Embodiment 1. FIG. 19 schematically shows a configuration of the cell analysis result screen when the second measurement process is performed.

[FIG.20] FIG.20 is a diagram of Embodiment 1. FIG.20 shows an example of display of an abnormal cell flag regarding white blood cells on the cell analysis result screen.

[FIG.21] FIG.21 relates to a second measurement process of Embodiment 1. FIG.21 is a flowchart showing a process of determining a flow rate per unit time of a measurement sample to be caused to flow in a flow cell of the second measurement unit.

[FIG.22] FIG.22 is a diagram of Embodiment 1. The upper part of FIG.22 is a graph showing switching of the flow rate per unit time in the flow cell of the second measurement unit to two stages according to the blood cell concentration. The lower part of FIG.22 is a graph showing that the flow rate per unit time in the flow cell of the second measurement unit is linearly changed according to the blood cell concentration.

[FIG.23] FIG.23 is a diagram of Modification 1 of Embodiment 1. FIG.23 is a flowchart showing a control process regarding the measurement by the controller.

[FIG.24] FIG.24 is a diagram of Modification 1 of Embodiment 1. FIG.24 schematically shows a configuration of the cell analysis result screen when the second measurement process is performed.

[FIG.25] FIG.25 is a diagram of Modification 1 of Embodiment 1. FIG.25 schematically shows a configuration of the cell analysis result screen when the second measurement process is performed.

[FIG.26] FIG.26 is a diagram of a second modification of Embodiment 1. FIG.26 is a flowchart showing a control process regarding the measurement by the controller.

[FIG.27] FIG.27 is a diagram of a second modification of Embodiment 1. FIG.27 schematically shows a configuration of the cell analysis result screen when the second measurement process is performed.

[FIG.28] FIG.28 is a diagram of Embodiment 2. FIG.28 is a front view schematically showing a configuration of a sample analyzer.

[FIG.29] FIG.29 is a diagram of Embodiment 2. FIG.29 is a block diagram showing a functional configuration of a third measurement unit.

[FIG.30] FIG.30 is a diagram of Embodiment 2. FIG.30 is a block diagram showing a functional configuration of a sample preparator of the third measurement unit.

[FIG.31] FIG.31 is a diagram of Embodiment 2. FIG.31 schematically shows a configuration of an optical detector of the third measurement unit.

[FIG.32] FIG.32 is a diagram of Embodiment 2. FIG.32 is a flowchart showing a control process regarding measurement by the controller.

[FIG.33] FIG.33 is a diagram of Modification 1 of Embodiment 2. FIG.33 is a flowchart showing a control process regarding the measurement by the controller.

[FIG.34] FIG.34 is a diagram of Modification 2 of Embodiment 2. FIG.34 is a block diagram showing a functional configuration of the sample preparator of the third measurement unit.

[FIG.35] FIG.35 is a diagram of Embodiment 3. FIG.35 schematically shows a procedure of generating a reconstructed image.
[FIG.36] FIG.36 is a diagram of Embodiment 3. FIG.36 schematically shows a configuration of a screen for displaying a reconstructed image.

DETAILED DESCRIPTION

The sample analyzer 1 shown in the following embodiments includes a first detector and a second detector whose measurement principles for measuring a sample are different from each other. Therefore, the sample analyzer 1 can provide a test result which does not rely only on a certain measurement principle. The test result is a result of classification and counting of cells in a sample, for example. In the sample analyzer 1, for example, a cell type which has been difficult to be classified by a measurement principle of the first detector can be classified by a measurement principle of the second detector. Therefore, an accuracy of the test result provided by the sample analyzer 1 is improved.


<Embodiment 1>

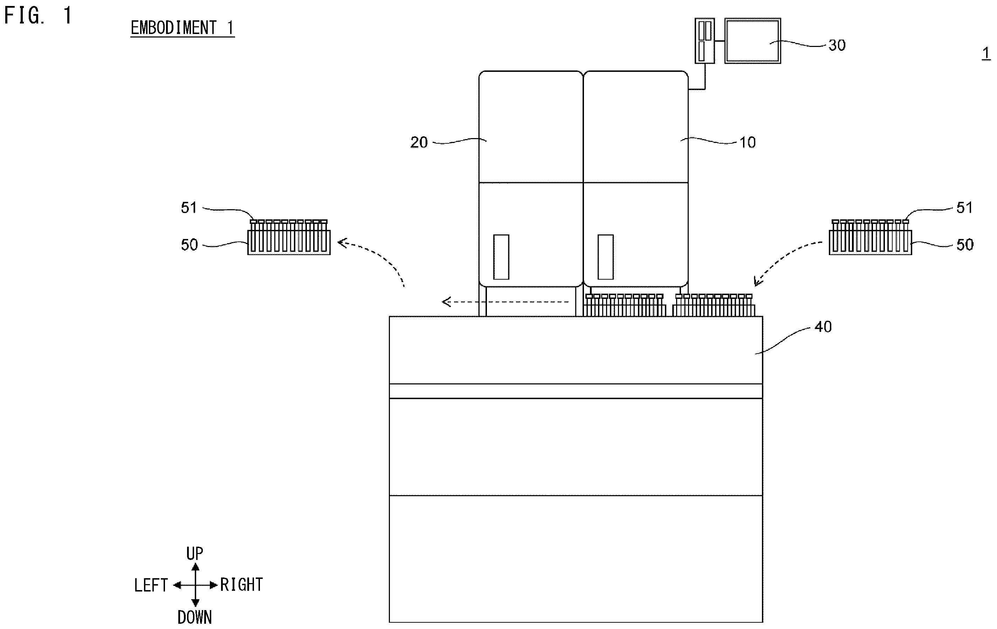

FIG.1 is a front view schematically showing a configuration of the sample analyzer 1.
The sample analyzer 1 includes a first measurement unit 10, a second measurement unit 20, a controller 30, and a conveyor 40.
The sample analyzer 1 is a device that automatically analyzes a sample. The sample is blood collected from a subject. A sample container 51 containing the sample is conveyed in a state of being held by a sample rack 50.
A laboratory technician, who is an operator of the sample analyzer 1, sets the sample container 51 containing the sample, into the sample rack 50. The operator places the sample rack 50 on a right end region of the conveyor 40. The conveyor 40 conveys the sample rack 50, whereby the sample rack 50 is positioned in front of the first measurement unit 10 and the second measurement unit 20 as appropriate.
The first measurement unit 10 takes out the sample container 51 from the sample rack 50. The first measurement unit 10 transfers the sample container 51 into the first measurement unit 10, and measures the sample in the sample container 51. When the measurement of the sample in the sample container 51 is completed, the first measurement unit 10 returns the sample container 51 to its original position of the sample rack 50. Similarly, the second measurement unit 20 takes out the sample container 51 from the sample rack 50. The second measurement unit 20 transfers the sample container 51 into the second measurement unit 20, and measures the sample in the sample container 51. When the measurement of the sample in the sample container 51 is completed, the second measurement unit 20 returns the sample container 51 to its original position of the sample rack 50. When the necessary measurements of all the sample containers 51 on one sample rack 50 is completed, the conveyor 40 transports the sample rack 50 to a region at the left end of the conveyor 40. The operator takes out the sample rack 50 conveyed to the left end region.
The first measurement unit 10 and the second measurement unit 20 can measure a sample conveyed on the conveyor 40. The conveyor 40 can automatically provide the sample rack 50 containing the sample to the first measurement unit 10 and the second measurement unit 20. Since the sample can be automatically provided to the first measurement unit 10 and the second measurement unit 20 by the conveyor 40, it is possible to reduce time and effort of the operator required for transferring the sample between the first measurement unit 10 and the second measurement unit 20.
The controller 30 controls the first measurement unit 10, the second measurement unit 20, and the conveyor 40. The controller 30 analyzes measurement information obtained by the first measurement unit 10. The controller 30 analyzes measurement information obtained by the second measurement unit 20.

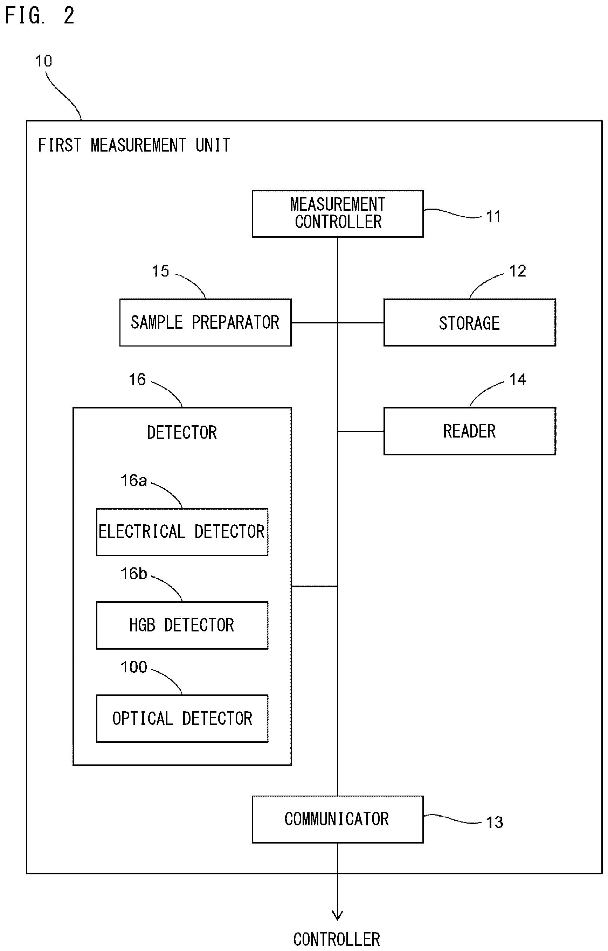

FIG.2 is a block diagram showing a functional configuration of the first measurement unit 10.
The first measurement unit 10 includes a measurement controller 11, a storage 12, a communicator 13, a reader 14, a sample preparator 15, and a detector 16.
The measurement controller 11 includes an FPGA or a CPU, for example. The storage 12 includes HDD, SSD, RAM, ROM, for example. The measurement controller 11 performs various kinds of processing on the basis of a program stored in the storage 12. The measurement controller 11 controls each component of the first measurement unit 10. The communicator 13 includes a connection terminal based on the USB standard, for example. The communicator 13 performs communication with the controller 30.
The reader 14 includes a bar code reader, for example. The reader 14 reads a barcode from a barcode label attached to the sample container 51. The bar code indicates a sample ID. The sample preparator 15 aspirates the sample from the sample container 51. The sample preparator 15 prepares a measurement sample by mixing reagents with the aspirated sample.
The detector 16 includes an electrical detector 16a, an HGB (hemoglobin) detection part 16b, and an optical detector 100. The electrical detector 16a electrically interrogates cells (blood cells) in the sample by sheath flow DC detection. The HGB detector 16b performs the measurement of hemoglobin of cells (blood cells) in the sample by the SLS-hemoglobin method. The optical detector 100 optically interrogates cells (blood cells) in the sample by flow cytometry.

The electrical detector 16a and the HGB detector 16b may include an amplifier and an A/D converter. The electrical detector 16a and the HGB detector 16b perform signal processing on a detection signal acquired by the measurement, and output the detection signal (measurement information) after the signal processing to the measurement controller 11. The optical detector 100 includes an amplifier and an A/D converter. The optical detector 100 performs signal processing on a detection signal acquired by the measurement, and outputs the detection signal (measurement information) after the signal processing to the measurement controller 11. The measurement information acquired by the optical detector 100 is hereinafter referred to as "first light information". The measurement controller 11 causes the storage 12 to store the measurement information and the first light information outputted from the detector 16. When the measurement of one sample is completed, the measurement controller 11 associates the measurement information and the first light information stored in the storage 12 with the sample ID read by the reader 14. The measurement controller 11 transmits the measurement information and the first light information and the corresponding sample ID to the controller 30.

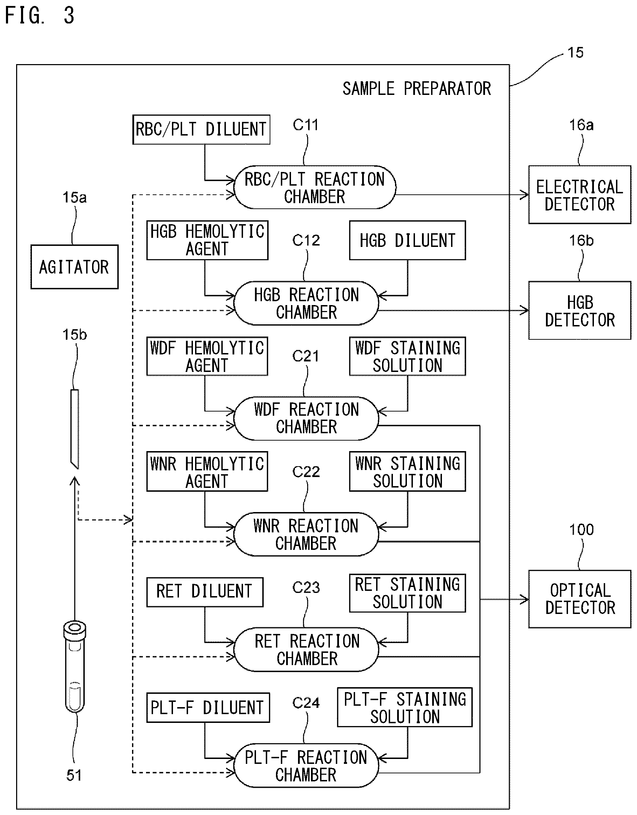

FIG.3 is a block diagram showing a functional configuration of the sample preparator 15 for preparing the measurement sample.

The sample preparator 15 includes an agitator 15a, an aspiration tube 15b, and reaction chambers C11, C12, C21 to C24.

The agitator 15a is configured to be capable of gripping the sample container 51. The agitator 15a is configured to be able to agitate a sample in the sample container 51 by swinging the gripped sample container 51. The aspiration tube 15b is a nozzle with sharpened edge at lower end. The aspiration tube 15b is configured to be able to penetrate through a lid of the sample container 51 made of an elastic material. The aspiration tube 15b aspirates the sample from the inside of the sample container 51 after being agitated. The aspiration tube 15b appropriately dispenses the aspirated sample into the reaction chambers C11,C12, C21 to C24.

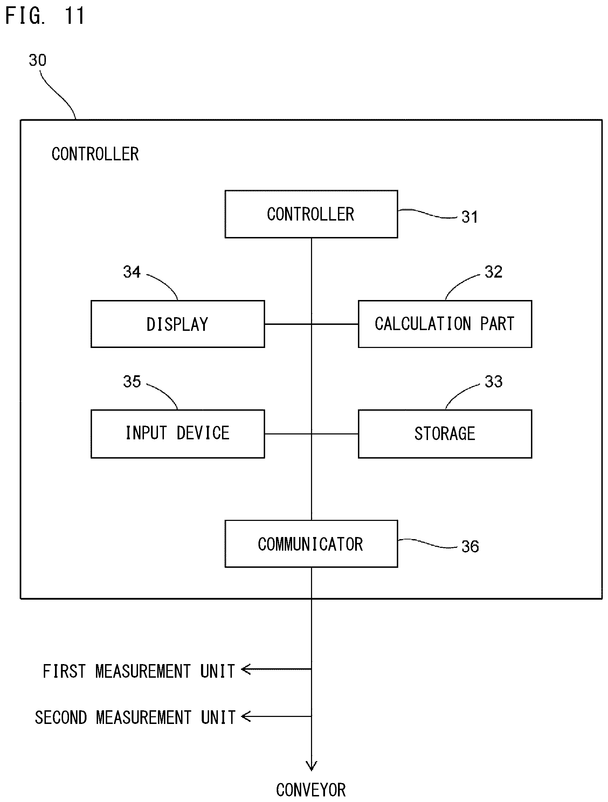

In the reaction chamber C11, the sample and the RBC/PLT diluent are mixed together to prepare an RBC/PLT measurement sample. The RBC/PLT diluent is Cellpack (registered trademark) DCL, for example. The RBC/PLT measurement sample prepared in the reaction chamber C11 is measured by the electrical detector 16a. The electrical detector 16a acquires a detection signal corresponding to each blood cell in the RBC/PLT measurement sample. The electrical detector 16a acquires measurement information by performing signal processing on the acquired detection signal. The controller 31 (see FIG. 11) of the controller 30 acquires the red blood cell count, the platelet count, and the like by analyzing the measurement information obtained by the measurement of the RBC/PLT measurement sample.

In the reaction chamber C12, the sample, a HGB hemolytic agent, and a HGB diluent are mixed together to prepare an HGB measurement sample. The HGB hemolytic agent is, for example, a sulforizer (registered trademark), and the HGB diluent is, for example, Cellpack (registered trademark) DCL. The HGB measurement sample prepared in the reaction chamber C12 is measured by the HGB detector 16b. The HGB detector 16b acquires a detection signal corresponding to the hemoglobin concentration. The HGB detector 16b acquires measurement information by performing signal processing on the acquired detection signal. The controller 31 of the controller 30 acquires the hemoglobin concentration and the like by analyzing the measurement information obtained by measurement of the HGB measurement sample.

In the reaction chamber C21, the sample, a WDF hemolytic agent, and a WDF staining solution are mixed together to prepare a WDF measurement sample. The WDF hemolytic agent is, for example, Lysercell (registered trademark) WDF II, and the WDF staining solution is, for example, Fluorocell (registered trademark)WDF. The WDF measurement sample prepared in the reaction chamber C21 is measured by the optical detector 100. The optical detector 100 acquires a detection signal corresponding to each blood cell in the WDF measurement sample. The optical detector 100 acquires the first light information by performing signal processing on the acquired detection signal. The controller 31 of the controller 30 analyzes the first light information obtained by the measurement of the WDF measurement sample and the first light information obtained by the measurement of the WNR measurement sample described later. In the analysis, the controller 31 classifies neutrophils, normal lymphocytes, monocytes, eosinophils, basophils, blasts, abnormal lymphocytes, atypical lymphocytes, immature granulocytes, nucleated red blood cells, and the like, and acquires the count of each blood cell.

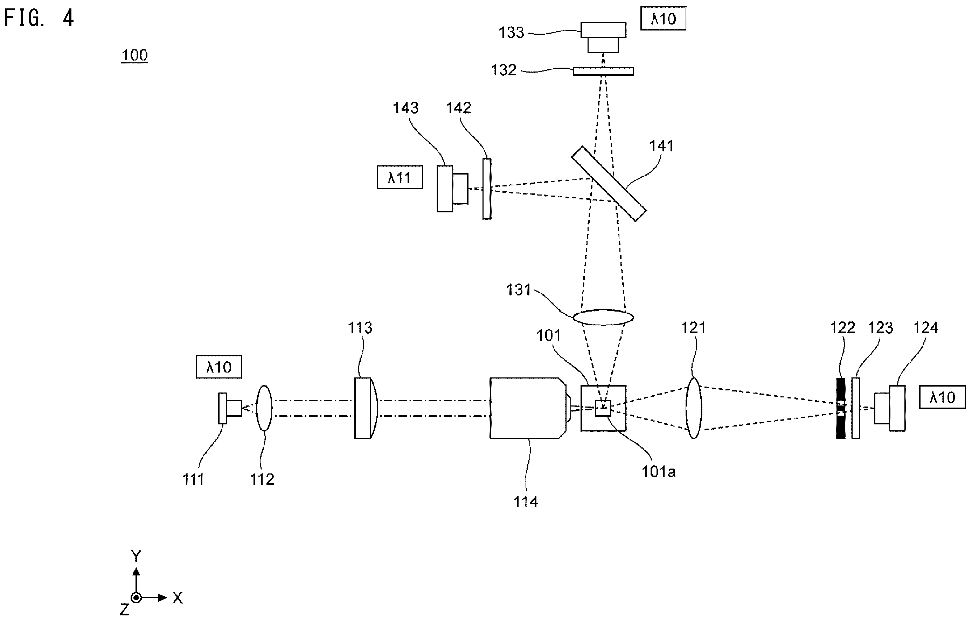

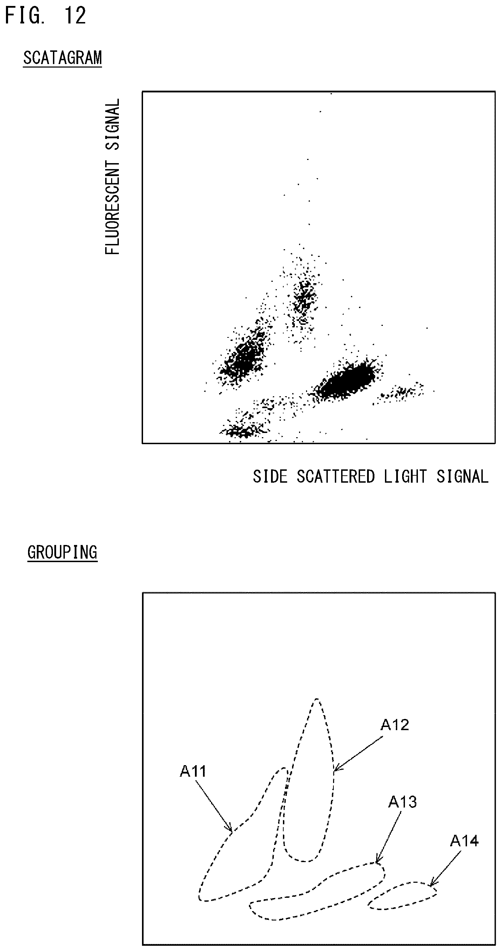

In this case, the first light information includes time-series data of a side scattered light corresponding to each cell, and time-series data of fluorescence corresponding to each cell. The time-series data of the side scattered light indicate an intensity change of the side scattered light received by the light receiver 133 while each cell in the WDF measurement sample flowing in the flow cell 101 (see FIG.4) passes through the beam spot BS. The time-series data of the fluorescence indicate an intensity change of the fluorescence received by the light receiver 143 while each cell in the WDF measurement sample flowing in the flow cell 101 passes through the beam spot BS. The controller 31 of the controller 30 acquires a peak value of the side scattered light corresponding to each cell from the time-series data of the side scattered light. The controller 31 acquires a peak value of the fluorescence corresponding to each cell from the time-series data of the fluorescence. The controller 31 generates a scattergram (see FIG.12) described later, on the basis of the peak value of the side scattered light and the peak value of the fluorescence.

In the reaction chamber C22, the sample, a WNR hemolytic agent, and a WNR staining solution are mixed together to prepare a WNR measurement sample. The WNR hemolytic agent is, for example, Lysercell (registered trademark) WNR, and the WNR staining solution is, for example, Fluorocell (registered trademark) WNR. The WNR measurement sample prepared in the reaction chamber C22 is measured by the optical detector 100. The optical detector 100 acquires a detection signal corresponding to each blood cell in the WNR measurement sample. The optical detector 100 acquires the first light information by performing signal processing on the acquired detection signal. The controller 31 of the controller 30 analyzes the first light information obtained by the measurement of the WNR measurement sample. In the analysis, the controller 31 classifies white blood cells, nucleated red blood cells, and the like, and acquires the count of each blood cell.

In this case, the first light information includes time-series data of a forward scattered light corresponding to each cell, and time-series data of fluorescence corresponding to each cell. The time-series data of the forward scattered light indicates an intensity change of the forward scattered light received by the light receiver 124 while each cell in the WNR measurement sample flowing in the flow cell 101 (see FIG.4) passes through the beam spot BS. The time-series data of the fluorescence indicate an intensity change of the fluorescence received by the light receiver 143 while each cell in the WNR measurement sample flowing in the flow cell 101 passes through the beam spot BS. The controller 31 of the controller 30 acquires a peak value of the forward scattered light corresponding to each cell from the time-series data of the forward scattered light. The controller 31 acquires a peak value of the fluorescence corresponding to each cell from the time-series data of the fluorescence. The controller 31 generates a scattergram (see FIG.12) described later, on the basis of the peak value of the forward scattered light and the peak value of the fluorescence.

In the reaction chamber C23, the sample, a RET diluent, and a RET staining solution are mixed together to prepare a RET measurement sample. The RET diluent is, for example, Cellpack (registered trademark) DFL, and the RET staining solution is, for example, Fluorocell (registered trademark) RET. The RET measurement sample prepared in the reaction chamber C23 is measured by the optical detector 100. The optical detector 100 acquires a detection signal corresponding to each blood cell in the RET measurement sample. The optical detector 100 acquires the first light information by performing signal processing on the acquired detection signal. The controller 31 of the controller 30 analyzes the first light information obtained by measurement of the RET measurement sample. In the analysis, the controller 31 classifies reticulocytes and the like, and acquires the count of each blood cell.

In this case, the first light information includes time-series data of a forward scattered light corresponding to each cell, and time-series data of fluorescence corresponding to each cell. The time-series data of the forward scattered light indicates an intensity change of the forward scattered light received by the light receiver 124 while each cell in the RET measurement sample flowing in the flow cell 101 (see FIG.4) passes through the beam spot BS. The time-series data of the fluorescence indicate an intensity change of the fluorescence received by the light receiver 143 while each cell in the RET measurement sample flowing in the flow cell 101 passes through the beam spot BS. The controller 31 of the controller 30 acquires a peak value of the forward scattered light corresponding to each cell from the time-series data of the forward scattered light. The controller 31 acquires a peak value of the fluorescence corresponding to each cell from the time-series data of the fluorescence. The controller 31 generates a scattergram (see FIG.12) described later, on the basis of the peak value of the forward scattered light and the peak value of the fluorescence.

In the reaction chamber C24, the sample, a PLT-F diluent, and a PLT-F staining solution are mixed together to prepare a PLT-F measurement sample. The PLT-F diluent is, for example, Cellpack (registered trademark) DFL, and the PLT-F staining solution is, for example, Fluorocell (registered trademark) PLT. The PLT-F measurement sample prepared in the reaction chamber C24 is measured by the optical detector 100. The optical detector 100 acquires a detection signal corresponding to each blood cell in the PLT-F measurement sample. The optical detector 100 acquires the first light information by performing signal processing on the acquired detection signal. The controller 31 of the controller 30 analyzes the first light information obtained by measurement of the PLT-F measurement sample. In the analysis, the controller 31 classifies platelets and the like, and acquires the count of each blood cell.

In this case, the first light information includes time-series data of a forward scattered light corresponding to each cell, and time-series data of fluorescence corresponding to each cell. The time-series data of the forward scattered light indicates an intensity change of the forward scattered light received by the light receiver 124 while each cell in the PLT-F measurement sample flowing in the flow cell 101 (see FIG.4) passes through the beam spot BS. The time-series data of the fluorescence indicate an intensity change of the fluorescence received by the light receiver 143 while each cell in the PLT-F measurement sample flowing in the flow cell 101 passes through the beam spot BS. The controller 31 of the controller 30 acquires a peak value of the forward scattered light corresponding to each cell from the time-series data of the forward scattered light. The controller 31 acquires a peak value of the fluorescence corresponding to each cell from the time-series data of the fluorescence. The controller 31 generates a scattergram (see FIG.12) described later, on the basis of the peak value of the forward scattered light and the peak value of the fluorescence.

The first light information may be any information obtained by irradiating at least one light having a single beam spot to each cell in the measurement sample, and is not limited to the above mentioned peak value. The first light information preferably reflects size, shape, internal structure, or amount of nucleic acid of each cell. The diluent, the hemolytic agent, and the staining solution to be mixed in the reaction chambers C11, C12, C21 to C24 are not limited to the above-described reagents.

FIG.4 schematically shows a configuration of the optical detector 100. In FIG.4, X-, Y-, Z-axes orthogonal to each other are provided for convenience. The Z-axis direction is the flow direction of the measurement sample in the flow cell 101.

The optical detector 100 includes the flow cell 101, a light source 111, a collimator lens 112, a cylindrical lens 113, a condenser lens 114, condenser lenses 121, 131, a beam stopper 122, optical filters 123, 132, 142, light receivers 124,133,143, and a dichroic mirror 141.

The light source 111 is a semiconductor laser light source, for example. The light source 111 emits light of a predetermined wavelength $\lambda 10$ in the X-axis direction. The wavelength $\lambda 10$ is 488 nm or 642 nm, for example. The collimator lens 112 converts light emitted from the light source 111 into parallel light. The cylindrical lens 113 converges the light from the light source 111 in the Y-axis direction. The condenser lens 114 forms the light into a flat shape at the position of the flow cell 101 and condenses the light on the flow path 101a of the flow cell 101 by converging the light from the light source 111 in the Y-axis direction and the Z-axis direction.

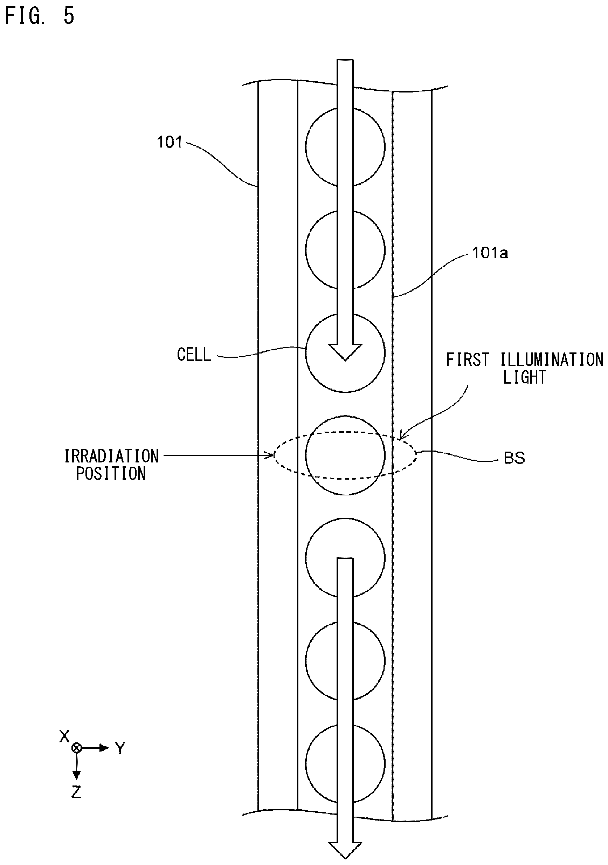

FIG.5 is a side view schematically showing a configuration of the flow cell 101.

The light from the light source 111 is irradiated to the irradiation position of the flow path 101a of the flow cell 101 as a single flat beam spot BS having a small width in the Z-axis direction. The beam spot BS is formed by the action of the cylindrical lens 113 and the condenser lens 114. Hereinafter, the light emitted from the light source 111 and irradiated to the irradiation position of the flow path 101a will be referred to as "first illumination light". When the first illumination light is irradiated to the cell flowing in the flow path 101a, a forward scattered light, a side scattered light, and a fluorescence are generated from the portion of the cell to which the light has been irradiated. Here, it is assumed that, when the first illumination light with wavelength $\lambda 10$ is irradiated to a fluorescent dye for staining the cell, a light with wavelength $\lambda 11$ is generated from the fluorescent dye.

Returning to FIG.4, the condenser lens 121 condenses the forward scattered light with the wavelength $\lambda 10$ generated from the cell, onto the light receiver 124. The beam stopper 122 blocks the light with the wavelength $\lambda 10$ that has passed through the flow cell 101 without being irradiated to cell, and allows the forward scattered light with the wavelength $\lambda 10$ generated from the cell to pass therethrough. The optical filter 123 is configured to transmit only the light with the wavelength $\lambda 10$. The light receiver 124 receives the forward scattered light having the wavelength $\lambda 10$ and transmitted through the optical filter 123, and outputs a detection signal according to an intensity of the received light. The light receiver 124 is a photoelectric sensor such as a photodiode (PD), for example.

The condenser lens 131 condenses the side scattered light with the wavelength $\lambda 10$ generated from the cell, onto the light receiver 133, and the fluorescence with the wavelength $\lambda 11$ generated from the cell, onto the light receiver 143. The dichroic mirror 141 allows the light with the wavelength $\lambda 10$ to be transmitted therethrough, and reflects the light with the wavelength $\lambda 11$. The optical filter 132 is configured to transmit only the light with the wavelength $\lambda 10$ from the dichroic mirror 141. Therefore, the side scattered light with the wavelength $\lambda 10$ generated from the cell is condensed at the light receiver 133. The fluorescence with the wavelength $\lambda 11$ generated from the cell is condensed at the light receiver 143. The light receiver 133 receives the side scattered light having the wavelength $\lambda 10$ and transmitted through the optical filter 132, and outputs a detection signal according to an intensity of the received light. The light receiver 133 is a photoelectric sensor such as a photodiode (PD), for example.

The optical filter 142 is configured to transmit only the light with the wavelength $\lambda 11$ from the dichroic mirror 141. The light receiver 143 receives the fluorescence having the wavelength $\lambda 11$ and transmitted through the optical filter 142, and outputs a detection signal according to an intensity of the received light. The light receiver 143 is a photoelectric sensor such as a photomultiplier (PMT), an avalanche photodiode (APD), or a photodiode (PD), for example.

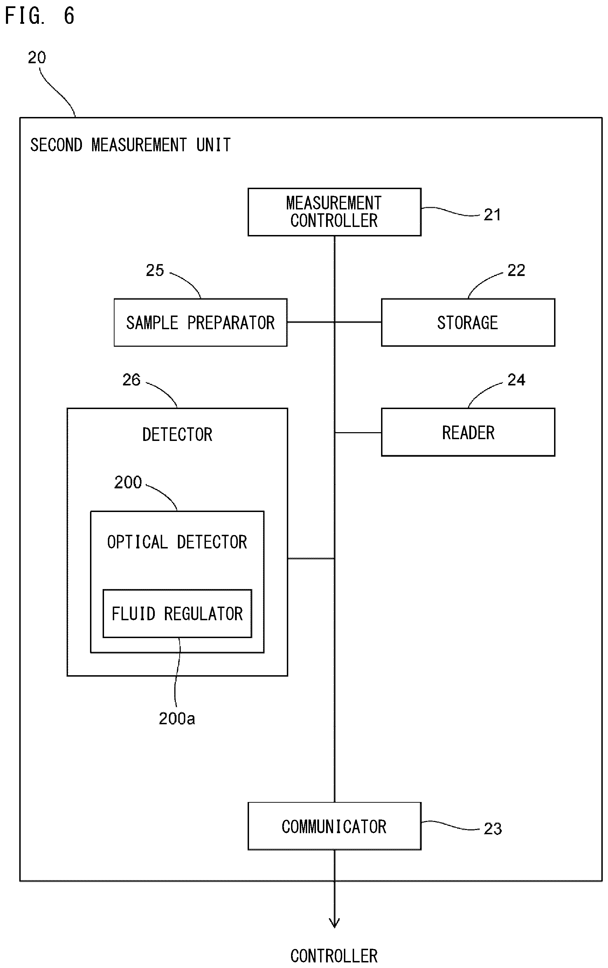

FIG.6 is a block diagram showing a functional configuration of the second measurement unit 20.

The second measurement unit 20 includes a measurement controller 21, a storage 22, a communicator 23, a reader 24, a sample preparator 25, and a detector 26.

The measurement controller 21 includes an FPGA or a CPU, for example. The storage 22 includes HDD, SSD, RAM, ROM, for example. The measurement controller 21 performs various kinds of processing on the basis of a program stored in the storage 22. The measurement controller 21 controls each component of the second measurement unit 20. The communicator 23 includes a connection terminal based on the USB standard, for example. The communicator 23 performs communication with the controller 30.

The reader 24 includes a bar code reader, for example. The reader 24 reads a barcode from the barcode label attached to the sample container 51. The bar code indicates a sample ID. The sample preparator 25 aspirates the sample from the sample container 51. The sample preparator 25 prepares a measurement sample by mixing reagents with the aspirated sample.

The detector 26 includes an optical detector 200. The optical detector 200 includes a fluid adjustment part 200a.

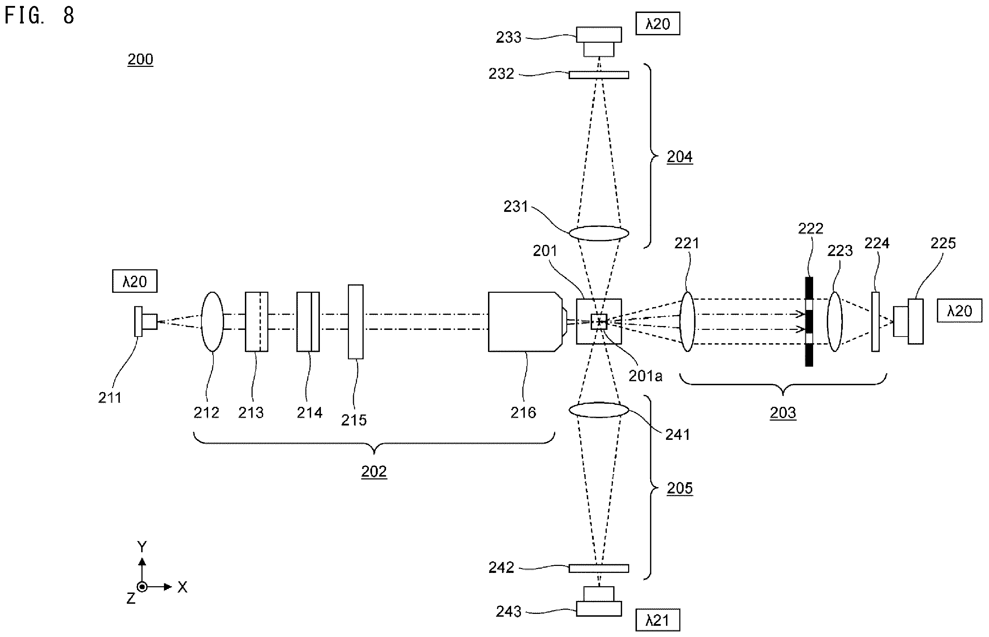

The fluid regulator 200a includes a container containing a sheath liquid, a syringe for transferring the measurement sample, and a pneumatic pressure source (pump) for transferring the sheath liquid. The fluid regulator 200a provides the sheath liquid together with the measurement sample prepared by the sample preparator 25 to the flow cell 201 (see FIG.8) of the optical detector 200. The fluid adjustment part 200a adjusts the flow rate (hereinafter, referred to as a flow rate per unit time) of the measurement sample flowing in the flow cell 201 per unit time. The optical detector 200 interrogates the measurement sample provided to the flow cell 201.

The optical detector 200 may include an amplifier and an A/D converter. The optical detector 200 performs signal processing on the detection signal acquired by the interrogation, and outputs the detection signal (measurement information) after the signal processing to the measurement controller 21. The measurement information acquired by the optical detector 200 is hereinafter referred to as "second light information". The measurement controller 21 causes the storage 22 to store the second light information outputted from the detector 26. When measurement of one sample is completed, the measurement controller 21 associates the second light information stored in the storage 22 with the sample ID read by the reader 24. The measurement controller 21 transmits the second light information stored in the storage 22 and the corresponding sample ID to the controller 30.

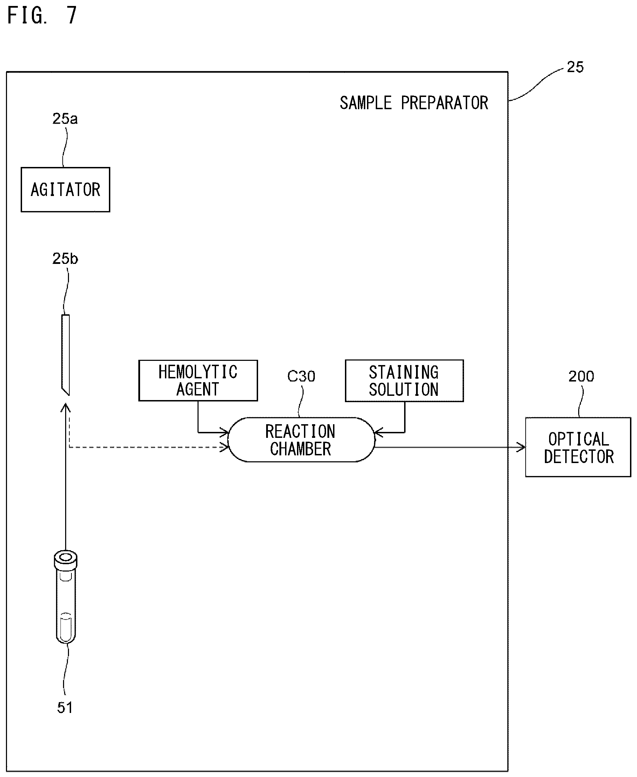

FIG.7 is a block diagram showing a functional configuration of the sample preparator 25 configured to prepare the measurement sample.

The sample preparator 25 includes an agitator 25a, an aspiration tube 25b, and a reaction chamber C30.

The agitator 25a is configured to be capable of gripping the sample container 51. The agitator 25a is configured to be able to agitate the sample in the sample container 51 by overturning the gripped sample container 51. The aspiration tube 25b is a nozzle with sharpened edge. The aspiration tube 25b is configured to be able to penetrate through a lid of the sample container 51 made of an elastic material. The aspiration tube 25b aspirates the sample from the inside of the sample container 51 after being agitated. The aspiration tube 25b dispenses the aspirated sample into the reaction chamber C30.

In the reaction chamber C30, the sample, a hemolytic agent for hemolyzing red blood cells, and a staining solution containing a fluorescent dye for staining a predetermined portion of a cell are mixed together to prepare a measurement sample. The hemolytic agent to be mixed in the reaction chamber C30 is the WDF hemolytic agent, for example. The staining solution to be mixed in the reaction chamber C30 is the WDF staining solution, for example. The measurement sample prepared in the reaction chamber C30 is interrogated by the optical detector 200. The optical detector 200 acquires a detection signal corresponding to each blood cell in the measurement sample. The optical detector 200 acquires the second light information by performing signal processing on the acquired detection signal. The controller 31 and a calculation part 32 of the controller 30 analyze the second light information obtained by interrogation of the measurement sample. In the analysis, the controller 31 and the calculation part 32 perform classification of neutrophils, normal lymphocytes, monocytes, eosinophils, basophils, blasts, abnormal lymphocytes, atypical lymphocytes, immature granulocytes, nucleated red blood cells, and the like, and acquire the count of each blood cell.

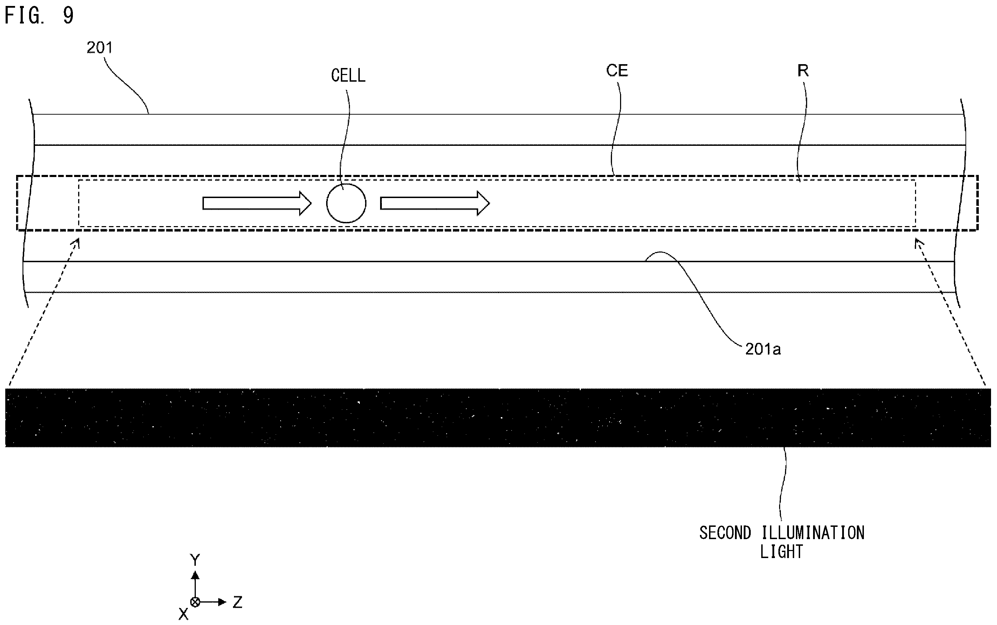

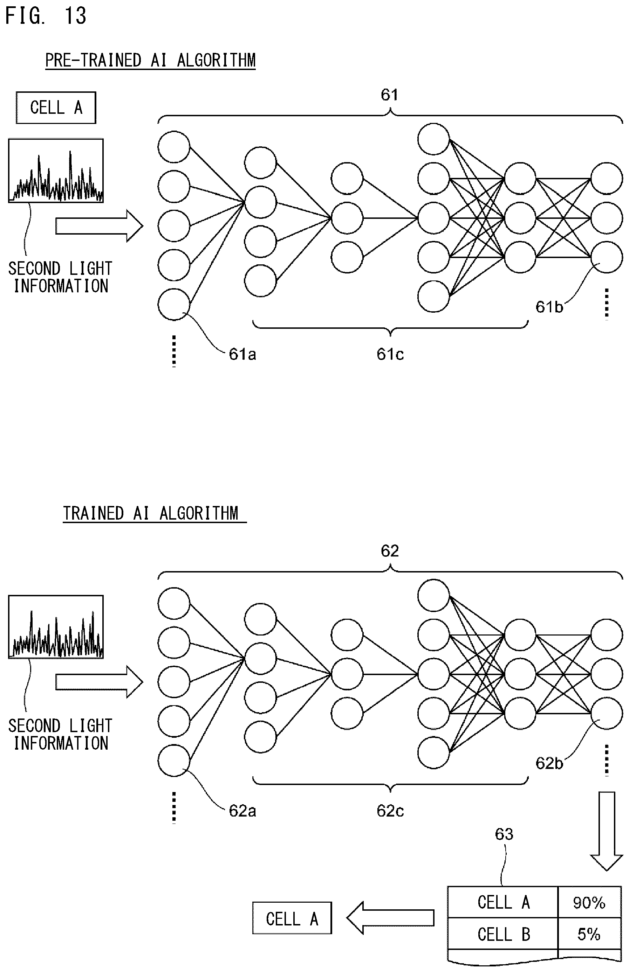

In this case, the second light information includes time-series data of a forward scattered light corresponding to each cell, time-series data of a side scattered light corresponding to each cell, and time-series data of fluorescence corresponding to each cell. The time-series data of the forward scattered light indicates an intensity change of the forward scattered light received by the light receiver 225 while each cell in the measurement sample flowing in the flow cell 201 (see FIG.8, 9) passes through the irradiation area R of the second illumination light. The time-series data of the side scattered light indicates an intensity change of the side scattered light received by the light receiver 233 while each cell in the measurement sample flowing in the flow cell 201 passes through the irradiation area R of the second illumination light. The time-series data of the fluorescence indicates an intensity change of the fluorescence received by the light receiver 243 while each cell in the measurement sample flowing in the flow cell 201 passes through the irradiation area R of the second illumination light. As will be described later, the controller 31 and the calculation part 32 of the controller 30 input the time-series data of the forward scattered light, the time-series data of the side scattered light, and the time-series data of the fluorescence to the trained AI algorithm 62 (see FIG.13), and analyze the time-series data.

The second light information may be information obtained by irradiating, to each cell in the measurement sample, the light which includes a plurality of distributed lights generated by diffracting a light using a diffractive optical element 215, and is not limited to the above time-series data. The information preferably reflects size, shape, internal structure, or amount of nucleic acid of each cell. The hemolytic agent and the staining solution to be mixed in the reaction chamber C30 are not limited to the above-described reagents. In the reaction chamber C30, mixing of the staining solution may be omitted. In the reaction chamber C30, a diluent may be mixed in place of the staining solution. In this case, the fluorescence condensing optical system 205 and the light receiver 243 described later in FIG.8 may be omitted.

FIG.8 schematically shows a configuration of the optical detector 200. In FIG.8, X-, Y-, Z-axes orthogonal to each other are provided for convenience. The Z-axis direction is the flow direction of a measurement sample in a flow cell 201.

The optical detector 200 includes the flow cell 201, a light source 211, an irradiation optical system 202, a forward condenser optical system 203, a side condenser optical system 204, a fluorescence condenser optical system 205, and light receivers 225, 233, 243.

The illumination optical system 202 includes a collimator lens 212, cylindrical lenses 213, 214, the diffractive optical element (DOE: Diffractive Optical Element) 215, and a condenser lens 216. The irradiation optical system 202 irradiates the light from the light source 211 to the flow path 201a of the flow cell 201. Hereinafter, the light emitted from the light source 211 and irradiated to the flow path 201a will be referred to as "second illumination light". The second illumination light is a light in which a plurality of distributed lights generated by diffracting a light using the diffractive optical element 215 are distributed. More specifically, the second illumination light is a light having a structured illumination pattern.

The forward condenser optical system 203 includes a condenser lens 221, a beam stopper 222, a condenser lens 223, and an optical filter 224. The forward condenser optical system 203 condenses a forward scattered light generated from the blood cell, onto the light receiver 225, and blocks the second illumination light that has passed through the flow cell 201 without being irradiated to the blood cell. The side condenser optical system 204 includes a condenser lens 231 and an optical filter 232. The side condenser optical system 204 condenses a side scattered light generated from the blood cell, onto the light receiver 233. The fluorescence condensing optical system 205 includes a condenser lens 241 and an optical filter 242. The fluorescence condensing optical system 205 condenses a fluorescence generated from the blood cell, onto the light receiver 243.

The light source 211 is a semiconductor laser light source, for example. The light source 211 emits light having a predetermined wavelength $\lambda 20$ in the X-axis direction. The wavelength $\lambda 20$ is 405 nm, for example. The fast-axis direction and the slow-axis direction of the light source 211 are parallel to the Y-axis direction and the Z-axis direction, respectively. The collimator lens 212 converts light emitted from the light source 211 into parallel light.

The cylindrical lens 213 is a concave cylindrical lens. The cylindrical lens 214 is a convex cylindrical lens. The cylindrical lens 213 shapes the light emitted from the light source 211 into an approximately perfect circle by increasing the width of the light in the Z-axis direction without changing the width in the Y-axis direction, and then directs the light into the cylindrical lens 214. The cylindrical lens 214 converts light emitted from the light source 211 into parallel light.

The light emitted from the light source 211 passes through the collimator lens 212 and the cylindrical lenses 213, 214. The collimator lens 212 and the cylindrical lenses 213, 214 are arranged so that the transmitted light has a shape of a substantially perfect circle when viewed in the X-axis direction. Therefore, the light incident on the diffractive optical element 215 has a shape of a substantially perfect circle.

The configurations of the light source 211, the collimator lens 212, and the cylindrical lenses 213, 214 may be any configuration as long as the light incident on the diffractive optical element 215 has a shape of a substantially perfect circle, and may be other configurations. For example, each of the light source 211, the collimator lens 212, and the cylindrical lenses 213, 214 may be rotated by 90 degrees in the X-axis direction. In this case, the fast-axis direction and the slow-axis direction of the light source 211 are parallel to the Z-axis direction and the Y-axis direction, respectively. As the light source 211, a light source to which light having a shape of a substantially perfect circle is irradiated may be used, and the collimator lens 212 and the cylindrical lenses 213, 214 may be omitted.

The diffractive optical element 215 has complex uneven diffraction pattern formed to impart a diffraction effect to the incident light. The uneven shape is formed by grooves, inclinations, and the like. The diffractive optical element 215 can be prepared on the basis of the description in U.S. Patent No. 9477018, for example. U.S. Patent No. 9477018 is incorporated herein by reference. The diffractive optical element 215 generates a plurality of distributed lights with different propagation directions by diffracting the light in the X-axis direction incident from the cylindrical lens 214 side. The plurality of distributed lights are those obtained by diffractively dividing the incident light. The diffraction orders of the plurality of distributed lights are different from each other. The condenser lens 216 condenses the plurality of distributed lights generated from the diffractive optical element 215, onto the flow cell 201. The plurality of distributed lights generated by the diffractive optical element 215 and having advancing directions different from each other are condensed at the flow cell 201 to form the second illumination light.

A measurement sample prepared in the reaction chamber C30 in FIG.7 flows in the flow cell 201. The second illumination light is irradiated to the cell in the measurement sample flowing in the flow cell 201. A forward scattered light, a side scattered light, and a fluorescence are generated from a portion of the cell to which the respective distributed lights in the second illumination light have been irradiated. The forward scattered light is generated in the X-axis direction. The side scattered light and the fluorescence are generated in a direction (e.g., the Y-axis direction) that crosses the X-axis direction.

The condenser lens 221 converges the forward scattered light generated from the cell, and the second illumination light transmitted through the flow cell 201 without being irradiated to the cell. The beam stopper 222 allows a forward scattered light generated from the cell to pass through, and blocks the second illumination light transmitted through the flow cell 201. The condenser lens 223 condenses the forward scattered light that is not blocked by the beam stopper 222, onto the light receiver 225. The optical filter 224 is configured to transmit only the light with the wavelength $\lambda 20$. The light receiver 225 receives the forward scattered light transmitted through the optical filter 224 and outputs a detection signal according to the intensity of the received light. The light receiver 225 is a photoelectric sensor such as a photomultiplier (PMT).

The condenser lens 231 condenses the side scattered light generated from the cell, onto the light receiver 233. The optical filter 232 is configured to transmit only the light with the wavelength $\lambda 20$. The light receiver 233 receives the side scattered light transmitted through the optical filter 232, and outputs a detection signal according to the intensity of the received light. The light receiver 233 is a photoelectric sensor such as a photomultiplier (PMT).

The condenser lens 241 condenses the fluorescence generated from the cell, onto the light receiver 243. The optical filter 242 is configured to transmit only the light with the wavelength $\lambda 21$. The light receiver 243 receives the fluorescence transmitted through the optical filter 242, and outputs a detection signal according to the intensity of the received light. The light receiver 243 is a photoelectric sensor such as a photomultiplier (PMT). The light receivers 225, 233, 243 are not limited to photomultipliers (PMT), and may be photodiodes (PD), for example.

FIG.9 schematically shows the flow cell 201 and the second illumination light. In FIG.9, the X-, Y-, Z-axes similar to those in FIG.8 are provided.

Inside the flow cell 201, a flow path 201a in which a stream of the measurement sample is formed parallel to the Z-axis. By flowing a sheath fluid along with the measurement sample in the flow path 201a, the measurement sample forms the center stream CE inside the flow path 201a. The cell included in the measurement sample moves through the center stream CE. The second illumination light condensed by the condenser lens 216 is irradiated to a predetermined irradiation area R positioned at the center stream CE of the flow path 201a. The flow rate per unit time of the measurement sample is adjusted such that only one cell is positioned in the irradiation area R at one time. In other words, the flow rate per unit time of the measurement sample is adjusted such that two or more cells do not simultaneously pass through the irradiation area R.

Since the flow rate is adjusted in this way, the throughput of measurement by the second measurement unit 20 may be lower than the throughput of measurement by the first measurement unit 10. The controller 31 is capable of controlling the operation of the second measurement unit 20 such that the number of cells measured by the second measurement unit 20 is smaller than the number of cells measured by the first measurement unit 10 in accordance with the above-described flow rate adjustment.

The lower part of FIG.9 exemplifies an image obtained by irradiating the second illumination light generated by the diffractive optical element 215 onto a dark chamber and capturing an image with a camera. In the image of the second illumination light in FIG.9, the black part indicates a region where no diffractive light is observed, and white dots indicate a spot where a diffractive light is observed. The white dots in the image of the second illumination light indicate the distributed lights generated by the diffractive optical element 215. In the example shown in FIG.9, the distributed lights include zero-order diffracted light and multi-order diffracted lights ranging from first-order diffracted light (+1 order diffracted light) to 300th-order distributed light (+300-order diffracted light) and minus first-order diffracted light (-1 order diffracted light) to minus 300th-order distributed light (-300-order diffracted light). Such distributed lights are shown as a total of six hundred and one white dots in the image of the second illumination light. A diffraction pattern (steps, grooves, and the like) is formed on the diffractive optical element 215 so that respective diffracted lights are distributed at predetermined positions as shown in the image of the second illumination light.

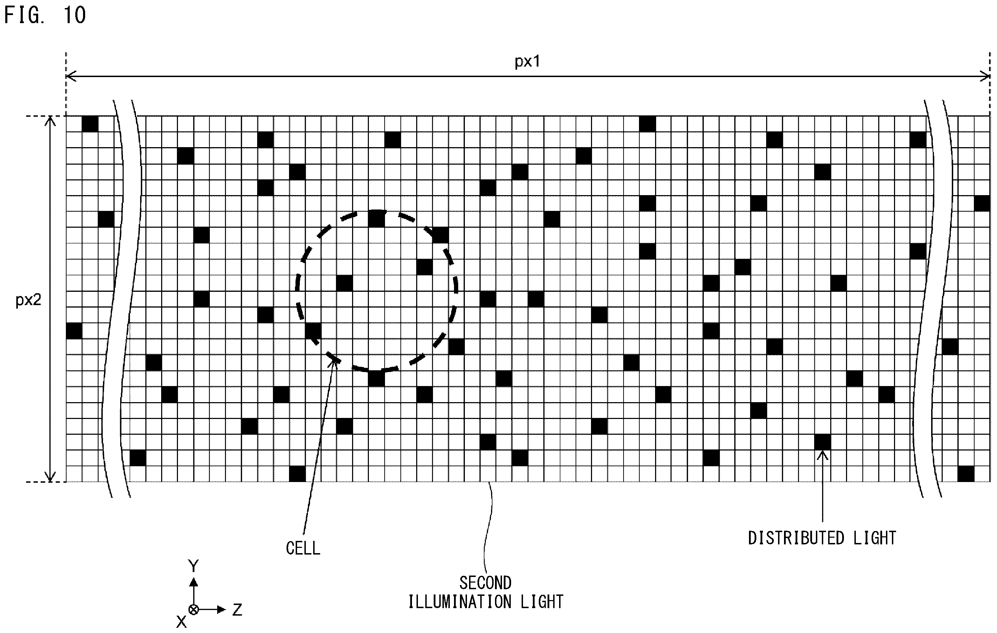

FIG.10 schematically shows a distribution pattern of the distributed lights included in the second illumination light.

FIG.10 shows an image in which the irradiation area R (see FIG.9) is sectioned into a grid shape by a plurality of squares. Each side of the square is the same length as the diameter of the spot of the distributed light. Each black square indicates a region where a spot of the distributed light is included. Each white square indicates a region where no spot of the distributed light is included. In FIG. 10, a cell passing through the irradiation area R is indicated by a broken line circle. In the example shown in FIG. 10, the diameter of the spot of the distributed light included in the image of the second illumination light is about 1 $\mu$m. In this case, the size of each square is 1 $\mu$m $\times$ 1 $\mu$m. The size of the cell is about 10 $\mu$m.

The size and the length in the Y-axis direction or the Z-axis direction of the second illumination light in the irradiation area R can be expressed in terms of the number of pixels. Here, each region in the grid shape is defined as one pixel. In the example shown in FIG. 10, the length of the second illumination light in the flow direction (the Z-axis direction) of the measurement sample is px1 (pixels), the length in the short direction (the Y-axis direction) of the second illumination light is px2 (pixels), and the size of the second illumination light is px1 * px2 (pixels). "*" means a multiple sign.

The diffractive optical element 215 is designed such that a plurality of distributed lights forming the second illumination light are distributed in a predetermined pattern. Here, the predetermined pattern is a random pattern. The pattern may be a pattern in which there is no repetition of a specific pattern at all, or may be a pattern in which a specific pattern is cyclically repeated. However, it is preferable that at least one distributed light is disposed in a region with a length of 1 pixel in the Y-axis direction and a length of px1 pixels in the Z-axis direction. Accordingly, the entire portion of the cell is exposed to the second illumination light at least once.

During measurement, when a measurement sample flows in the flow path 201a of the flow cell 201, each cell in the measurement sample moves in the Z-axis direction in the irradiation area R of the second illumination light. At this time, the fluid adjustment part 200a (see FIG.6) flows the measurement sample such that the flow rate per unit time is substantially constant. When distributed light included in the second illumination light is irradiated to a cell flowing in the Z-axis direction, a forward scattered light and a side scattered light are generated from the portion of the cell to which the distributed light has been irradiated. When distributed light is irradiated to the cell stained by the fluorescent dye, a fluorescence is generated from the fluorescent dye to which the distributed light has been irradiated. The light receiver 225 (see FIG.8) receives the forward scattered light generated by the plurality of distributed lights irradiated to the cell. The light receiver 233 (see FIG.8) receives the side scattered light generated by the plurality of distributed lights irradiated to the cell. The light receiver 243 (see FIG.8) receives the fluorescence generated due to a plurality of distributed lights irradiated to the stained cell.

When the cell flows in the Z-axis direction, the number of distributed lights irradiated to the cell changes. When the cell flows in the Z-axis direction, the portion of the cell to which each distributed light is irradiated changes. Accordingly, when the cell flows in the Z-axis direction, an intensity of the forward scattered light generated from the cell, an intensity of the side scattered light, and an intensity of the fluorescence change over time. Therefore, the detection signal of each light receiver 225, 233, 243 also changes in time series. As will be described later, the calculation part 32 (see FIG. 11) classifies the cell by the AI algorithm 62 (see FIG. 13) on the basis of the second light information acquired from these detection signals.

FIG.11 is a block diagram showing a functional configuration of the controller 30.

The controller 30 includes a controller 31, a calculation part 32, a storage 33, a display 34, an input device 35, and a communicator 36.

The controller 31 includes a CPU, for example. The calculation part 32 includes a GPU, for example. The storage 33 includes HDD, SSD, RAM, ROM and the like. The controller 31 executes a program stored in the storage 33. The controller 31 controls each component of the controller 30. The controller 31 analyzes the cell on the basis of the measurement information acquired by the first measurement unit 10 and the measurement information acquired by the second measurement unit 20.

The controller 31 acquires the first analysis result by analyzing the measurement information acquired by the electrical detector 16a of the first measurement unit 10, the measurement information acquired by the HGB detector 16b, and the first light information acquired by the optical detector 100. At this time, the controller 31 generates a scattergram for each sample based on the first light information, and classifies the cell based on the generated scattergram.

For example, the controller 31 generates a scattergram, as exemplified in the upper part of FIG. 12, based on the first light information obtained by measuring the WDF measurement sample. The controller 31 groups the plots on the scattergram into a plurality of cell populations. In grouping the cell populations, the controller 31 classifies the cells using clustering analysis, for example. The clustering analysis may include: (i) setting multiple regions on the scattergram to encompass some of the plots to be analyzed, (ii) determining the points of the center of gravity for the respective regions based on the plots included in each region, and (iii) clustering the plots according to cell populations based on the distances from the individual plots to the points of the center of gravity.

By grouping of the cell populations, as illustrated in the lower part of FIG.12, a region A11 corresponding to a normal lymphocyte, a region A12 corresponding to a monocyte, a region A13 corresponding to a neutrophil and a basophil, and a region A14 corresponding to an eosinophil are set. When blasts, abnormal lymphocytes, atypical lymphocytes, immature granulocytes, and nucleated red blood cells are included in the measurement sample, a region corresponding to these blood cells is also set. The controller 31 counts the plots in the regions set in the scattergram, and acquires the count of blood cells of each classification.

It should be noted that the controller 31 does not necessarily need to generate an actual scattergram to group the cell populations. For example, the controller 31 may perform the grouping of the cell populations by processing data corresponding to the scattergram.

The controller 31 causes the calculation part 32 to perform analysis by the AI algorithm 62 (see FIG.13). The calculation part 32 analyzes the second light information acquired by the optical detector 200 of the second measurement unit 20. The controller 31 acquires the second analysis result based on an analysis result of the second light information by the calculation part 32. The AI algorithm 62 is a deep learning algorithm, for example.

The display 34 includes a liquid crystal display, for example. The input device 35 includes a pointing device including a keyboard, a mouse, and a touch panel. The liquid crystal display of the display 34 and the touch panel of the input device 35 may be integrally configured. The communicator 36 includes a connection terminal based on the USB standard, for example. The communicator 36 performs communication with the first measurement unit 10, the second measurement unit 20, and the conveyor 40.

FIG. 13 is a schematic diagram showing the pre-trained AI algorithm 61 and the trained AI algorithm 62.

When training the AI algorithm 61, a light source is added to the optical detector 200 shown in FIG.8. This light source irradiates a light for exciting a fluorescence to the measurement sample flowing in the flow cell 201. A label (e.g., an antibody to which a fluorescent dye has been added) that binds to a cell surface marker (e.g., an antigen) is added to each cell included in the measurement sample. The label includes a fluorescent dye whose fluorescence is excited by the light from the light source. The fluorescence excited by the light from the light source is received by the light receiver 243.

As shown in the upper part of FIG.13, the second light information for training used for training the pre-trained AI algorithm 61 is information of a cell measured by the second measurement unit 20, for example. The cell flows in the flow cell 201, and a fluorescence is received by the light receiver 243. The type of the cell is determined on the basis of the received fluorescence. The type ([cell A] in the example in the upper part of FIG.13) of the determined cell is associated with the second light information for training. When it is necessary to detect a plurality of types of cell surface markers, the optical detector 200 may include a plurality of light receivers corresponding to the respective plurality of types of cell surface markers.

The AI algorithm 61 is composed of a neural network including multiple middle layers. The neural network in this case is a convolution neural network having a convolution layer, for example. The AI algorithm 61 has an input layer 61a, an output layer 61b, and middle layers 61c. The second light information obtained by sampling, at a predetermined sampling interval, an analog detection signal obtained from one cell is inputted to the input layer 61a. A label value indicating the type of the cell corresponding to the inputted second light information is inputted to the output layer 61b. Accordingly, the AI algorithm 61 is trained. Such training is repeatedly executed in advance to generate the trained AI algorithm 62.

As shown in the lower part of FIG. 13, the trained AI algorithm 62 also has an input layer 62a, an output layer 62b, and middle layers 62c. The second light information acquired on the basis of the sample of the subject is inputted to the input layer 62a. Accordingly, classification information 63 regarding the type of the cell corresponding to the second light information is outputted from the output layer 62b. The classification information 63 includes the probabilities that the target cell corresponds to each of the multiple types. Further, on the basis of a calculation result including these probabilities calculated by the calculation part 32, the controller 31 determines the type having the highest probability ([cell A] in the example in the lower part of FIG.13) as the type of the target cell.

Such training of the AI algorithm 61 and classification according to the AI algorithm 62 are performed by inputting data groups of the second light information obtained for each cell by one or more light receivers out of the three light receivers 225, 233, 243 (see FIG.8) to the input layer. For example, when data groups of the second light information obtained from one of the light receivers 225, 233, 243 are used, the number of the packets of the second light information inputted to the AI algorithm 61, 62 correspondingly to one cell is one, and the number of nodes of the input layer 61a, 62a is n. For example, when data groups of the three second light information obtained from the respective three light receivers 225, 233, 243 are used, the number of the packets of the second light information inputted to the AI algorithm 61, 62 correspondingly to one cell is three, and the number of nodes of the input layer 61a, 62a is 3n.

In Embodiment 1, the calculation part 32 performs cell classification by the AI algorithm 62, but the controller 31 may perform cell classification by the AI algorithm 62. However, the calculation part 32 including the GPU can quickly perform classification of the cell by the AI algorithm 62.

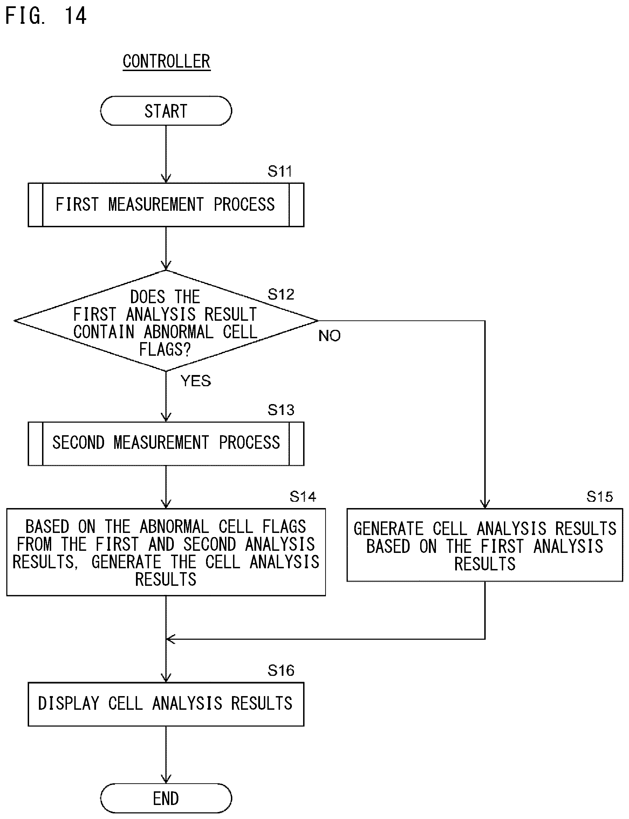

Next, measurement processing of the sample analyzer 1 will be described with reference to FIG.14 to FIG.16.

FIG.14 is a flowchart showing control processing regarding the measurement by the controller 30.

In step S11, the controller 31 of the controller 30 controls the first measurement unit 10 so that the first measurement process is performed. Accordingly, the controller 31 analyzes the measurement information and the first light information acquired by the first measurement unit 10, and acquires the first analysis result.

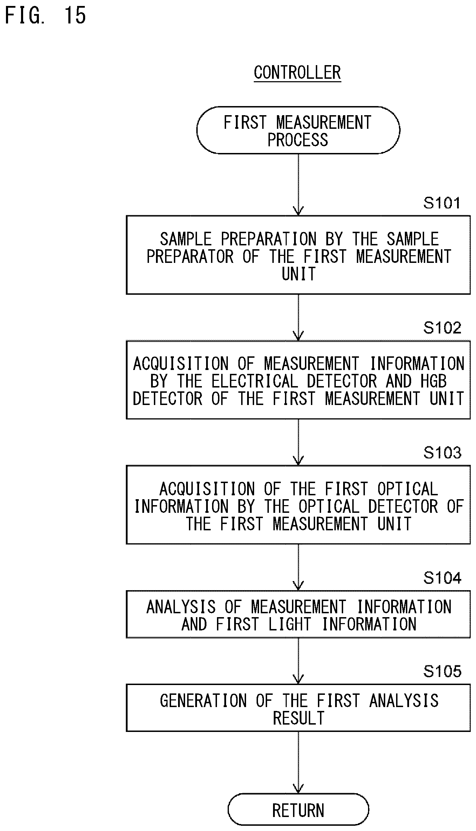

The first analysis result includes a count value (e.g., a count per unit volume) of a cell in a sample, an abnormal cell flag indicating a presence of an abnormal cell, and a scattergram or a histogram. In Embodiment 1, the count value of the first analysis result is a count value of a red blood cell, a white blood cell, a neutrophil, a normal lymphocyte, a monocyte, an eosinophil, a basophil, a platelet, an abnormal cell, or the like. The abnormal cell flag in the first analysis result may include (i) a flag indicating that the count per unit volume of abnormal cells such as blast cells, abnormal lymphocytes, atypical lymphocytes, immature granulocytes, and nucleated red blood cells in the target sample is equal to or greater than a threshold value, and (ii) a flag indicating that the classification state of white blood cells is abnormal. An abnormal cell is a cell that is not present in the peripheral blood of a healthy person, or is present only in small numbers. The first measurement process will be described later with reference to FIG.15.

In step S12, the controller 31 determines whether or not the first analysis result acquired in step S11 includes the abnormal cell flag. When the first analysis result includes the abnormal cell flag (step S12:YES), in step S13, the controller 31 controls the second measurement unit 20 to perform the second measurement process. Accordingly, the controller 31 analyzes the second light information acquired by the second measurement unit 20, and acquires the second analysis result. In step S12, the controller 31 selectively determines whether to generate a cell analysis result based on the first analysis result or a cell analysis result based on the first analysis result and the second analysis result.

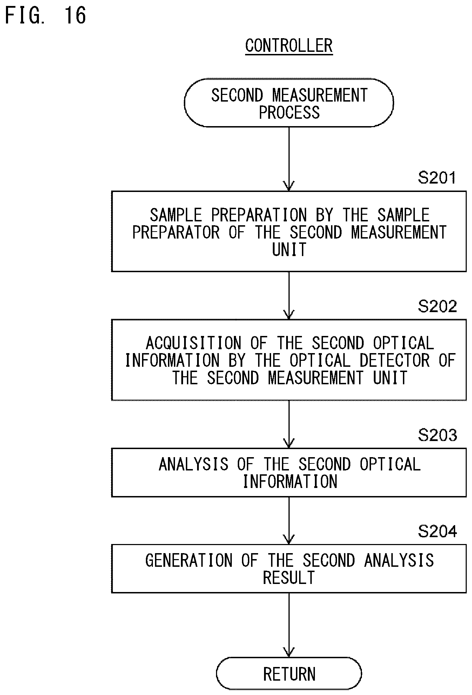

The second analysis result includes a count value (a count per unit volume) of a cell in the sample, and an abnormal cell flag indicating a presence of an abnormal cell. In Embodiment 1, the count value of the second analysis result is a count value of a red blood cell, white blood cell, neutrophil, normal lymphocyte, monocyte, eosinophil, basophil, blast, abnormal lymphocyte, atypical lymphocyte, immature granulocyte, nucleated red blood cell, or the like. The abnormal cell flag in the second analysis result is a flag indicating that the count per unit volume of the abnormal cell in the target sample is equal to or greater than a threshold value set for each type of abnormal cell. The abnormal cell is, for example, a blast cell, an abnormal lymphocyte, an atypical lymphocyte, an immature granulocyte, a nucleated red blood cell, or the like. The second measurement process will be described later with reference to FIG.16.

Subsequently, in step S14, the controller 31 generates an analysis result (cell analysis result) of the cell in the target sample on the basis of the first analysis result acquired in step S11 and the abnormal cell flag of the second analysis result acquired in step S13.

On the other hand, in a case where the first analysis result does not include the abnormal cell flag (step S12: NO), in step S15, the controller 31 generates an analysis result (cell analysis result) of a cell in the target sample based on the first analysis result acquired in step S11.

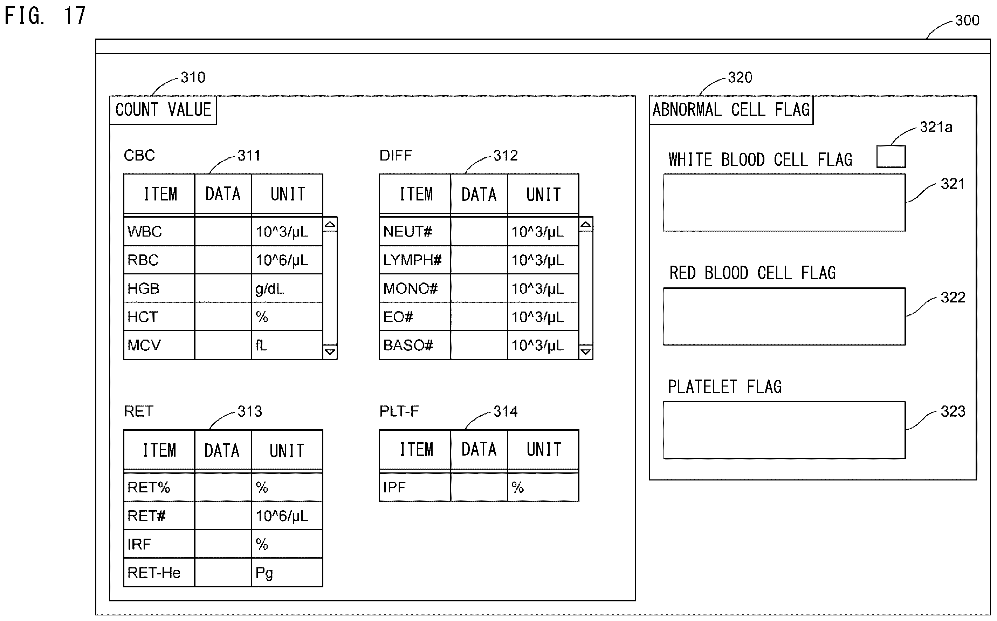

When the laboratory technician inputs a display instruction via the input device 35 (see FIG.11), in step S16, the controller 31 displays the cell analysis result screen 300 including the cell analysis result generated in step S14 or step S15, on the display 34 (see FIG.11). The cell analysis result screen 300 will be described later with reference to FIG.17 to FIG.20.

As described above, in the example in FIG.14, since the second measurement process is executed when the first analysis result includes the abnormal cell flag, a frequency of measurements by the second measurement unit 20 is lower than a frequency of measurements by the first measurement unit 10. That is, the controller 31 is capable of controlling each measurement unit such that the frequency of measurements by the second measurement unit 20 is lower than the frequency of measurements by the first measurement unit 10. As described with reference to FIG.9, in the second measurement unit 20, the flow rate of the measurement sample is adjusted such that only one cell is positioned at one time in the irradiation area R of the second illumination light. Therefore, a throughput of the measurements by the second measurement unit 20 may be lower than a throughput of the measurements by the first measurement unit 10. Therefore, when the frequency of measurements by the second measurement unit 20 becomes substantially the same as the frequency of measurements by the first measurement unit 10, a throughput of entire laboratory may decrease. Since the frequency of measurements by the second measurement unit 20 is lower than the frequency of measurements by the first measurement unit 10, it is possible to suppress a decrease in the throughput of the entire laboratory while taking advantages of the second measurement unit 20.

FIG.15 is a flowchart showing a first measurement process.

In step S101, the controller 31 of the controller 30 controls the first measurement unit 10 such that sample preparation by the sample preparation unit 15 (see FIG.2, 3) of the first measurement unit 10 is performed. Accordingly, measurement samples are prepared in the reaction chambers C11, C12, C21 to C24.

Here, for convenience, it is assumed that the measured samples are prepared in all of the reaction chambers C11, C12, C21 to C24. However, in practice, a necessary measurement sample is prepared according to the measurement item designated for the sample to be subjected. In steps S102, S103 in the subsequent stage, the measurement samples are measured by any of the electrical detector 16a, the HGB detector 16b, and the optical detector 100 according to the prepared measurement samples.

In step S102, the controller 31 controls the first measurement unit 10 such that measurement is performed by the electrical detector 16a and the HGB detector 16b. The controller 31 acquires measurement information based on this measurement from the first measurement unit 10. In step S103, the controller 31 controls the first measurement unit 10 to perform measurement by the optical measurement unit 100. Accordingly, as shown in FIG.5, the optical measurement unit 100 irradiates the first illumination light having the single beam spot BS to the cell in the sample included in the measurement sample flowing in the flow cell 101, thereby acquiring the first light information. Then, the controller 31 acquires the first light information acquired by the detector 16 from the first measurement unit 10.

In step S104, the controller 31 analyzes the measurement information acquired in step S102 and the first light information acquired in step S103. In step S105, the controller 31 generates the first analysis information by the analysis in step S104. The first analysis information includes a count value of a blood cell obtained by analyzing the measurement information based on the measurement by the electric measurement unit 16a, hemoglobin amount obtained by analyzing the measurement information based on the measurement by the HGB measurement unit 16b, and a count value and an abnormal cell flag of a blood cell obtained by analyzing the first light information based on the measurement by the optical measurement unit 100.

FIG.16 is a flowchart showing a second measurement process.

In step S201, the controller 31 of the controller 30 controls the second measurement unit 20 such that sample preparation by the sample preparation unit 25 (see FIG.6, 7) of the second measurement unit 20 is performed. Accordingly, a measurement sample is prepared in the reaction chamber C30.

In step S202, the controller 31 controls the second measurement unit 20 to perform measurement by the optical measurement unit 200. Accordingly, as shown in FIG.9, the optical measurement unit 200 irradiates the second illumination light to the cell in the sample included in the measurement sample flowing in the flow cell 201, and acquires the second light information. Then, the controller 31 acquires the second light information acquired by the detector 26 from the second measurement unit 20.

In step S203, the controller 31 and the calculation part 32 input the second light information acquired in step S202 to the trained AI algorithm 62 (see FIG.13), and analyze the second light information. In step S204, the controller 31 and the calculation part 32 generate the second analysis information by the analysis in step S203. The second analysis information includes a count value of the blood cell and an abnormal cell flag obtained by analyzing the second light information based on the measurement by the optical detector 200.

Next, with reference to FIG.17 to FIG.20, a cell analysis result screen 300 displayed in step S16 in FIG.14 will be described.

FIG.17 schematically shows a configuration of the cell analysis result screen 300.

The cell analysis result screen 300 includes a count value display region 310 and an abnormal cell flag display region 320.

The count value display region 310 includes display regions 311 to 314 corresponding to the analysis modes of CBC, DIFF, RET and the PLT-F, respectively. In the display region 311, as count values corresponding to the CBC mode, for example, white blood cell count (WBC), red blood cell count (RBC), hemoglobin concentration (HGB), hematocrit value (HCT), mean corpuscular volume (MCV), and the like are displayed. In the display region 312, as the count values corresponding to the DIFF mode, for example, neutrophil count (NEUT#), lymphocyte count (LYMPH#), monocyte count (MONO#), eosinophil count (EO#), basophil count (BASO#), and the like are displayed. In the display region 313, as a count value corresponding to the RET mode, for example, reticulocyte ratio (RET%), reticulocyte count (RET#), immature reticulocyte fraction (IRF), reticulocyte hemoglobin equivalent (RET-He), and the like are displayed. In the display region 314, an immature platelet ratio or the like is displayed as a count value corresponding to the PLT-F mode.

A scattergram or a histogram included in the first analysis result may be displayed on the cell analysis result screen 300.

The abnormal cell flag display region 320 includes display regions 321 to 323 which display an abnormal cell flag regarding white blood cells, an abnormal cell flag regarding red blood cells, and an abnormal cell flag regarding platelets, respectively. A label 321a is added to the display region 321. On the label 321a, a number of 1 or 2 is displayed. The label 321a on which "1" is displayed indicates that the abnormal cell flag regarding white blood cells displayed in the display region 321 is based on the first analysis result. The label 321a on which "2" is displayed indicates that the abnormal cell flag regarding white blood cells displayed in the display region 321 is based on the second analysis result.

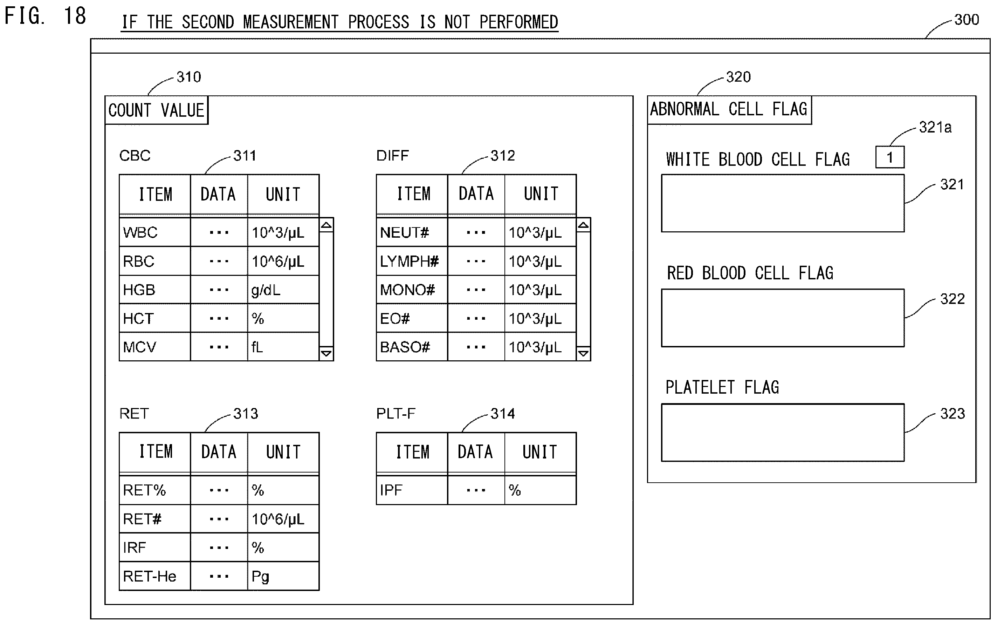

When step S15 in FIG. 14 is executed, since the second measurement process is not executed, the second analysis result is not acquired. Therefore, the cell analysis result is generated on the basis of the first analysis result based on the first measurement process. In this case, as shown in FIG.18, a cell analysis result based on only the first analysis result is displayed on the cell analysis result screen 300. "1" is displayed on the label 321a to indicate that the abnormal cell flag based on the first analysis result is displayed in the display region 321 where the abnormal cell flag regarding white blood cells is displayed. In the example shown in FIG. 18, since there is no abnormal cell flag based on the first analysis result, no abnormal cell flag is displayed in the display regions 321 to 323.

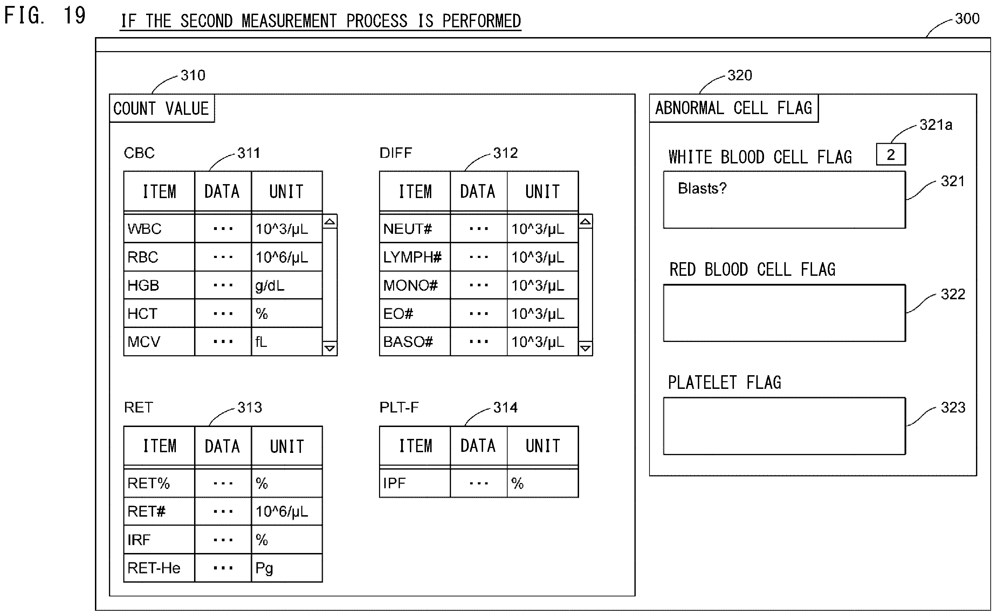

When step S14 in FIG.14 is executed, the second measurement process is executed. Therefore, the cell analysis result is generated on the basis of the first analysis result based on the first measurement process and the abnormal cell flag of the second analysis result. In this case, as shown in FIG.19, on the cell analysis result screen 300, the count value and the abnormal cell flag based on the first analysis result are displayed in the count value display region 310 and the display regions 322, 323. In the display region 321 in which the abnormal cell flag regarding white blood cells is displayed, an abnormal cell flag based on the second analysis result is displayed in place of the abnormal cell flag based on the first analysis result. "2" is displayed on the label 321a to indicate that the abnormal cell flag based on the second analysis result is displayed in the display region 321. In the example shown in FIG.19, "Blasts?" is displayed in the display region 321 because the abnormal cell flag regarding the blast cell is included in the second analysis result. That is, in this example, a part (abnormal cell flag) of the cell analysis result is complemented by the second analysis result on the basis of the first analysis result.

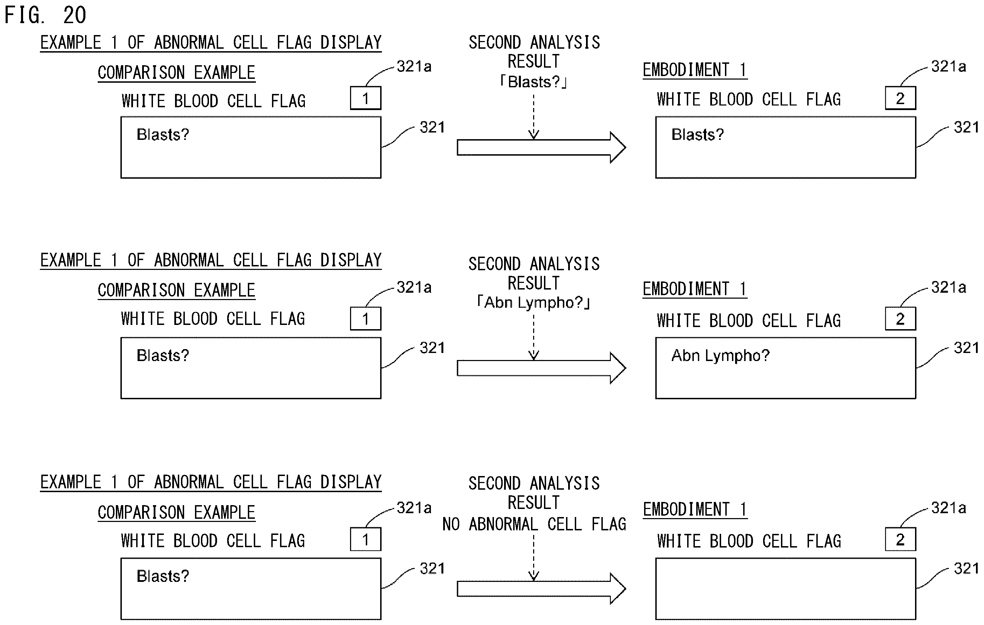

FIG.20 shows an example of display of an abnormal cell flag regarding white blood cells in the cell analysis result screen 300.

On the left side of the upper part, the middle part, and the lower part of FIG.20, as a comparative example, an example is shown in which an abnormal cell flag regarding blasts is included in the first analysis result. "Blasts?" is displayed in the display region 321, and "1" is displayed in the label 321a.

On the other hand, in Embodiment 1, the second measurement process is performed, and when the abnormal cell flag regarding blasts is also included in the second analysis result, a screen shown in the right side of the upper part of FIG.20 is displayed. In this case, "2" is displayed on the label 321a in order to indicate that the abnormal cell flag based on the second analysis result is displayed in place of the abnormal cell flag based on the first analysis result. In Embodiment 1, when the second measurement process is performed and the abnormal cell flag regarding abnormal lymphocytes is included in the second analysis result, a screen shown on the right side of the middle row of FIG.20 is displayed. In this case, "Abn Lympho?" is displayed in the display region 321 in place of "Blasts?" in the comparative example, and "2" is displayed in the label 321a. In Embodiment 1, when the second measurement process is performed and the abnormal cell flag is not included in the second analysis result, a screen shown in the right side of the lower part of FIG.20 is displayed. In this case, "Blasts?" of the comparative example is not displayed in the display region 321, and "2" is displayed in the label 321a.

As described above, in Embodiment 1, when the second measurement process is performed, only the abnormal cell flag based on the second analysis result is displayed, regardless of the presence or absence and the type of the abnormal cell flag in the first analysis result. Accordingly, the laboratory technician can accurately grasp that there is an abnormal cell in the target sample. Therefore, the laboratory technician can accurately determine whether or not a smear needs to be prepared at the subsequent stage of the sample analyzer 1. When preparing the smear, the laboratory technician can efficiently examine the smear with reference to an accurate abnormal cell flag based on the second analysis result.

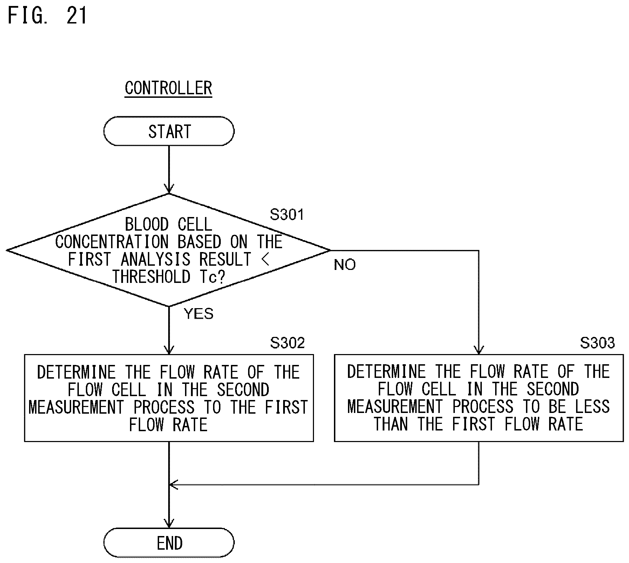

Next, control of the fluid adjustment part 200a (see FIG.6) of the second measurement unit 20 will be described with reference to FIG.21.

FIG.21 is a flowchart showing a process of determining a flow rate per unit time of a measurement sample to be caused to flow in the flow cell 201 in the second measurement process. This process is executed after determining YES in step S12 in FIG. 14 and before the second measurement process in step S13 is started.

In step S301, the controller 31 of the controller 30 determines whether or not a blood cell concentration based on the first analysis result acquired in the first measurement process is smaller than a predetermined threshold value Tc. In Embodiment 1, the blood cells to be determined in step S301 is white blood cells. The blood cell concentration is the count of blood cells per unit volume in a sample. The concentration of white blood cells is a white blood cell count included in the count value of the CBC mode of the first analysis result, for example.

When the blood cell concentration is smaller than the predetermined threshold valueTc (step S301 :YES), in step S302, the controller 31 determines the flow rate per unit time of the flow cell 201 in the second measurement process as the first flow rate. In this case, the controller 31 controls the fluid regulator 200a such that the flow rate per unit time of the measurement sample flowing in the flow cell 201 becomes the first flow rate in the second measurement process in step S13 in FIG.14.

On the other hand, when the blood cell concentration is equal to or greater than the predetermined threshold value Tc (step S301: NO), in Step S303, the controller 31 determines the flow rate per unit time of the flow cell 201 in the second measurement process as the second flow rate smaller than the first flow rate. In this case, the controller 31, in the second measurement process in step S13 in FIG. 14, controls the fluid regulator 200a such that the flow rate per unit time of the measurement sample flowing in the flow cell 201 is the second flow rate.

When the controller 31 controls the flow rate as described above, a measurement time by the second measurement unit 20 may be longer than a measurement time by the first measurement unit 10. When the measurement time by the second measurement unit 20 is longer than the measurement time by the first measurement unit 10, a throughput of the measurement by the second measurement unit 20 is lower than a throughput of the measurement by the first measurement unit 10.

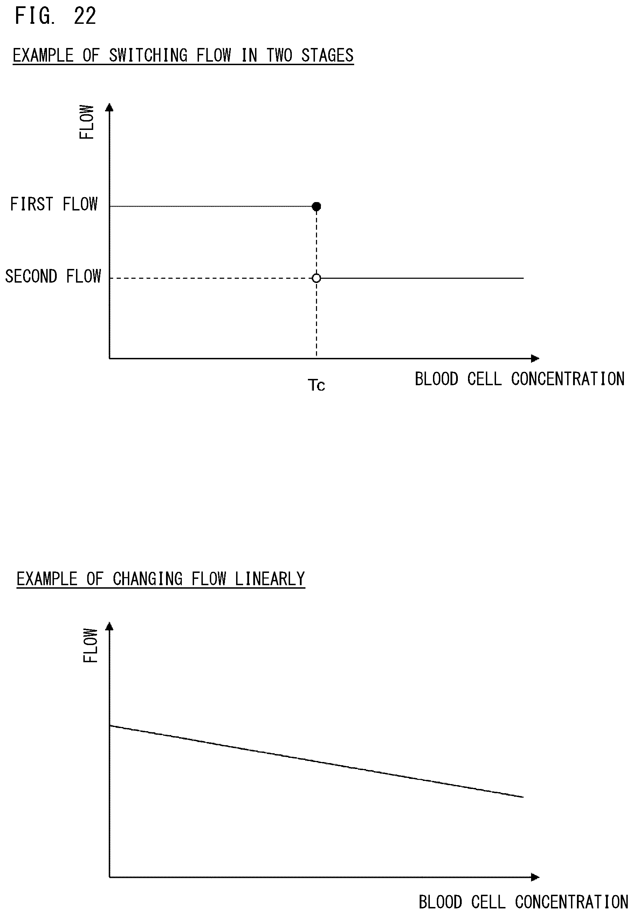

The upper part of FIG.22 is a graph showing switching of the flow rate per unit time in the flow cell 201 into two stages according to the concentration of blood cells.

In Embodiment 1, as described in FIG.21, according to whether or not the blood cell concentration is larger than the threshold value Tc, the flow rate per unit time in the flow cell 201 is set to one of the first flow rate and the second flow rate. Drive signals of the fluid regulator 200a for realizing the first flow rate and the second flow rate, respectively, and the threshold value Tc are stored in advance in the storage 33 (see FIG.11) of the controller 30.

When the blood cell concentration of the sample is high, decreasing the flow rate per unit time in the flow cell 201 makes it easier to position one cell at a time in the irradiation area R (see FIG. 9). When the flow rate per unit time is set small, the diameter of the center stream CE (see FIG.9) in the flow path 201a in which the measurement sample runs surrounded by the sheath liquid flow decreases. Accordingly, only one cell is easily positioned in the irradiation area R.

The adjustment of flow rate per unit time in the flow cell 201 is not limited to switching in two levels. The flow rate per unit time may be linearly changed according to the blood cell concentration, for example, as shown in the lower part of FIG.22. In this case, the controller 31 of the controller 30 determines the flow rate per unit time from the blood cell concentration using a mathematical expression indicating a relationship between the blood cell concentration and the flow rate per unit time, and determines a drive signal of the fluid adjustment unit 200a on the basis of a table in which the flow rates per unit time and the drive signals are associated with each other.

<Effects of sample analyzer and sample analysis method according to Embodiment 1>

The sample analyzer 1 configured to analyze cells in a sample collected from a subject includes the optical detector 100 (first measurement unit), the optical detector 200 (second measurement unit), and the controller 31. As shown in FIG.5, the optical detector 100 (first measurement unit) interrogates cells passing through the beam spot BS of at least one first illumination light (step S103 in FIG.15) to obtain the first light information. As shown in FIG.9, the optical detector 200 (second measurement unit) interrogates the cell passing through the irradiation area R of the second illumination light having the plurality of distributed lights generated by the diffractive optical element 215, to obtain the second light information (step S202 in FIG.16). The controller 31 generates a cell analysis result based on one of (1) the first analysis result, (2) the second analysis result, and (3) the first analysis result and the second analysis result (steps S14, S15 in FIG.14).

According to this configuration, the measurement principle of the optical detector 100 and the measurement principle of the optical detector 200 are different from each other. Accordingly, the sample analyzer 1 can provide a test result (e.g., a result of classification and counting of cells in a sample) which does not rely only on a specific measurement principle. For example, even if it is difficult to classify a cell type according to the measurement principle of the first measurement unit 10, classification can be performed according to the measurement principle of the second measurement unit 20, thereby improving the accuracy of the test results provided by the sample analyzer 1.

The optical detector 200 (second detector) optically interrogates individual cell to obtain the second light information which contains more information of individual cell than the first light information. The optical detector 200 (second detector) obtains the second light information which contains more information regarding morphology of individual cell than the first light information.

According to this configuration, for example, a number of samples which are false positive is reduced. Therefore, the laboratory technician can reduce a number of times of preparation and inspection of smear samples or the like by referring to the analysis result of the second light information. That is, the laboratory technician can omit preparation of the smear samples by referring to more accurate cell analysis results. When the smear samples are prepared, the laboratory technician can efficiently inspect the smear samples by referring to more accurate cell analysis results. Therefore, a burden on the laboratory technician can be reduced.

The controller 31 generates the first analysis result by a first analysis method, and generates the second analysis result by a second analysis method. The first analysis method and the second analysis method are different from each other.

The first analysis result is generated by grouping cells on the scattergram based on the first light information, as described with reference to FIG.12. The second analysis result is generating by inputting the second light information to the AI algorithm 62 as described with reference to FIG. 13. As described above, since the first analysis result and the second analysis result are generated on the basis of different analysis methods, it is possible to classify, on the basis of the other analysis result, a cell type which has been difficult to be classified only by one analysis result.

The controller 31 selectively determines whether to generate the cell analysis result based on the first analysis result or the first analysis result and the second analysis result.

According to this configuration, since it is selectively and automatically determined how to generate the cell analysis result, it is possible to omit time and effort for the laboratory technician to select the analysis result, and it is possible to quickly generate the cell analysis result.

The controller 31 generates the cell analysis result based on the first analysis result and the second analysis result such that the first analysis result is complemented by the second analysis result.

According to this configuration, as illustrated in FIG.19, a part (abnormal cell flag) of the cell analysis result is complemented by the second analysis result on the basis of the first analysis result. Accordingly, the laboratory technician can refer to a cell analysis result with higher accuracy than a cell analysis result based on only one analysis result.

The optical detector 100 (first detector) and the optical detector 200 (second detector) measure a sample conveyed to the sample analyzer 1 by the conveyor 40.

According to this configuration, it is possible to reduce the time and effort of the laboratory technician required for transferring the sample between the first measurement unit 10 including the optical measurement unit 100 and the second measurement unit 20 including the optical measurement unit 200.

The controller 31 can control the operations of the optical measurement unit 100 (the first measurement unit) and the optical measurement unit 200 (the second measurement unit) so that the frequency of the measurement by the optical measurement unit 200 (the second measurement unit) is lower than the frequency of the measurement by the optical measurement unit 100 (the first measurement unit).

The flow rate of the measurement sample is adjusted such that only one cell is positioned at one time in the irradiation area R of the optical detector 200. Therefore, the throughput of the measurement by the optical detector 200 may be lower than the throughput of the measurement by the optical detector 100. On the other hand, according to the above configuration, it is possible to set the frequency of the measurement by the optical detector 200 to be lower than the frequency of the measurement by the optical detector 100. Accordingly, it is possible to suppress a decrease in throughput of the sample analyzer 1 while taking advantage of the optical measurement unit 200.

The controller 31 controls the operations of the optical measurement unit 100 (the first measurement unit) and the optical measurement unit 200 (the second measurement unit) so that the frequency of the measurement by the optical measurement unit 200 (the second measurement unit) is lower than the frequency of the measurement by the optical measurement unit 100 (the first measurement unit), and generates a cell analysis result based on the first analysis result and the second analysis result so that the first analysis result is complemented by the second analysis result.

Also in this configuration, it is possible to suppress a decrease in throughput of the sample analyzer 1 while taking advantage of the optical detector 200. A laboratory technician can refer to the cell analysis result with higher accuracy than a cell analysis result based on only one analysis result.

The calculation part 32 (controller) generates the second analysis result using the AI algorithm 62 (artificial intelligence algorithm) shown in FIG.13.

According to this configuration, the second analysis result can be generated quickly and accurately.

The controller 31 selectively determines whether to generate the cell analysis result based on one of (1) the first analysis result, (2) the second analysis result, and (3) the first analysis result and the second analysis result, so that the frequency of the measurement by the optical measurement unit 200 (the second measurement unit) is lower than the frequency of the measurement by the optical measurement unit 100 (the first measurement unit).

Also in this configuration, it is possible to suppress a decrease in throughput of the sample analyzer 1 while taking advantage of the optical measurement unit 200. Since the laboratory technician can omit the time and effort of selecting the analysis result, the cell analysis result can be generated quickly.

The acquisition of the second light information by the optical detector 200 (the second detector) and the generation of the second light analysis result by the controller 31 (step S13 in FIG. 14) are executed when the first analysis result includes the abnormal cell flag (when the first analysis result satisfies a predetermined condition) (step S12: YES). When the first analysis result satisfies a predetermined condition, the controller 31 generates the cell analysis result exemplified in FIG.19 based on at least the abnormal cell flag (second analysis result) included in the second analysis result (step S14 in FIG. 14).

According to this configuration, in a case where the first analysis result does not satisfy the predetermined condition, the step of acquiring and analyzing the second light information is omitted. Accordingly, for example, a time required for testing a sample can be shortened. Further, an amount of the reagent used can be suppressed.

The predetermined condition is satisfied by the first analysis result indicative of the presence of an abnormal cell in the sample.

According to this configuration, when the first analysis result indicates that there is an abnormal cell in the sample, the cell analysis result is generated based on at least the second analysis result. Accordingly, on the basis of the cell analysis result, it is possible to accurately determine the presence or absence of an abnormal cell in the sample.

The condition indicative of a presence of the abnormal cell includes at least one of: a condition indicative of a presence of a blast cell; a condition indicative of a presence of an abnormal lymphocyte; a condition indicative of a presence of an atypical lymphocyte; a condition indicative of a presence of an immature granulocyte; a condition indicative of an abnormality of classification of white blood cells; and a condition indicative of a presence of a nucleated red blood cell.

According to this configuration, when there is a blast, an abnormal lymphocyte, an atypical lymphocyte, an immature granulocyte, or when the classification state of white blood cells is abnormal, the second analysis result is acquired. Therefore, the laboratory technician can accurately determine whether or not to prepare a smear sample, and the like, with reference to the second analysis result.

When the first analysis result satisfies the predetermined condition described above (step S12: YES) and the second analysis result indicates the presence of an abnormal cell (upper part and middle part of FIG.20), the controller 31 generates a cell analysis result indicating the presence of an abnormal cell based on the second analysis result exemplified in FIG.19 (step S14 in FIG.14).

According to this configuration, an abnormal cell is suggested on the basis of the second analysis result, among the first analysis result and the second analysis result, which more accurately reflects the state of the cell in the sample. Accordingly, the laboratory technician can recognize accurately the state of the abnormal cell, and thus the burden on him/her can be reduced.

When the first analysis result satisfies the predetermined condition described above (step S12: YES) and the second analysis result does not indicate the presence of any type of abnormal cell (lower part of FIG.20), the controller 31 generates the cell analysis result indicating the absence of the abnormal cell (step S14 in FIG. 14).

According to this configuration, even if the first analysis result indicates the presence of an abnormal cell, if the second analysis result that more accurately reflects the state of the cells in the sample does not indicate the presence of any type of abnormal cell, a cell analysis result that does not indicate the presence of the abnormal cell is generated. Accordingly, the laboratory technician can accurately grasp the state of the abnormal cell, thus the burden on him/her can be reduced.

The sample analyzer 1 includes the flow cell 101 (first flow cell) and the flow cell 201 (second flow cell). The optical detector 100 (first detector) interrogates the cell flowing in the flow cell 101 (first flow cell) through the beam spot BS to obtain the first light information. The optical detector 200 (second detector) interrogates the cell flowing in the flow cell 201 (second flow cell) through the irradiation area R of the second illumination light in which the plurality of distributed lights generated by the diffractive optical element 215 to which the light has been incident are distributed, thereby obtaining the second light information.

According to this configuration, since the acquisition of the first light information and the acquisition of the second light information are performed in separate flow cells, these steps can be simultaneously performed.

The first light information includes information of scattered light and information of fluorescence from the cell to which the first illumination light has been irradiated.

According to this configuration, a size and an internal structure of the cell can be grasped on the basis of the information of the scattered light of the first illumination light. According to this configuration, an amount of nucleic acid in the cell can be grasped on the basis of the information of the fluorescence of the first illumination light.

In generating the first analysis result (step S104 in FIG.15), the controller 31 groups the plurality of cells irradiated with the first illumination light into a plurality of cell populations as illustrated in the lower part of FIG.12, and in generating the second analysis result (step S203 in FIG.16), classifies individual cells to which the second illumination light has been irradiated into cell types.

According to this configuration, in the process of generating the first analysis result, it is possible to easily classify the cells. According to this configuration, in the process of generating the second analysis result, classification of the cells with high accuracy can be performed.

The controller 31 controls the optical measurement unit 200 (second measurement unit) so that the cell passes through the irradiation area R of the second illumination light under the fluid condition according to the first analysis result (steps S302, S303 in FIG.21).

According to this configuration, since the fluid condition of the cell can be appropriately set according to the first analysis result, analysis based on the second light information can be accurately performed.

A sample analysis method to analyze cells in a sample collected from a subject includes: acquiring first light information of cells passing through at least one beam spot BS of a first illumination light (step S103 in FIG.15); acquiring second light information of cells passing through an irradiation area R of a second illumination light, wherein the second illumination light includes a plurality of distributed lights generated by diffracting a light using a diffractive optical element 215; and generating a cell analysis result based on one of the first analysis result, and the first analysis result and the second analysis result (steps S14, S15 in FIG.14).

According to this method, the measurement principle at the time of acquiring the first light information is different from the measurement principle at the time of acquiring the second light information. This can provide a test result (e.g., a result of classification and counting of cells in a sample) that does not rely solely on a particular measurement principle. For example, although classification is difficult in the first analysis result, classification is possible in the second analysis result, and the accuracy of the analysis result is improved.

<Modification 1 of Embodiment 1>

In Embodiment 1, when the second measurement process is performed, only the abnormal cell flag in the first analysis result is replaced with the second analysis result. The present invention is not limited thereto, and the count value and the abnormal cell flag of the first analysis result may be replaced with the second analysis result.

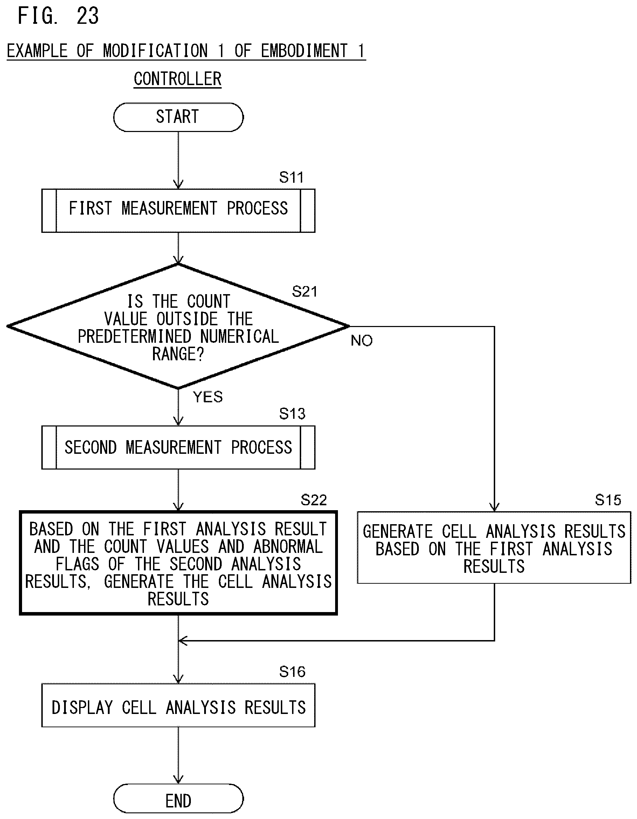

FIG.23 is a flowchart showing a control process regarding measurement by the controller 30.

In the control processing of this modification, steps S21, S22 are added in place of steps S12, S14 as compared with Embodiment 1 shown in FIG.14.

In step S21, the controller 31 of the controller 30 determines whether or not a count value included in the first analysis result is outside a predetermined range. In this modification, the count value is a white blood cell count. The predetermined range is a numerical range in which the reliability of the first analysis result is maintained. The predetermined range includes an upper limit value and a lower limit value, and is stored in advance in the storage 33 of the controller 30.

When the count value included in the first analysis result is outside the predetermined range (step S21: YES), in step S13, the controller 31 performs the second measurement process described above. In this modification, when the white blood cell count included in the first analysis result is larger than a predetermined upper limit value or the white blood cell count included in the first analysis result is smaller than a predetermined lower limit value, the controller 31 sets the determination result in step S21 to YES.

When the determination result in step S21 is YES, it is assumed that grouping of white blood cells as shown in FIG. 12 is not properly performed, and that the reliability of the count value of each classification of white blood cells included in the first analysis result and the reliability of the abnormal cell flag regarding white blood cells are low. Alternatively, when the determination result in step S21 is YES, it is assumed that grouping of white blood cells as shown in FIG.12 is appropriately performed and the count value of each classification of white blood cells included in the first analysis result is appropriate, but the reliability of the flag of the abnormal cell is low. Therefore, in this modification, in such a case, the second measurement process is performed, and a detailed analysis result regarding white blood cells is acquired. As described above, in step S21, the controller 31 selectively determines whether to generate the cell analysis result based on the first analysis result or generate the cell analysis result based on the first analysis result and the second analysis result.

In step S22, the controller 31 generates a cell analysis result of the target sample based on the first analysis result acquired in step S11 and the count value and the abnormal cell flag of the second analysis result acquired in step S13.

On the other hand, in a case where the count value included in the first analysis result is within the predetermined range (Step S21: NO), as in Embodiment 1, in Step S15, the controller 31 generates a cell analysis result of the target sample based on the first analysis result acquired in Step S11.

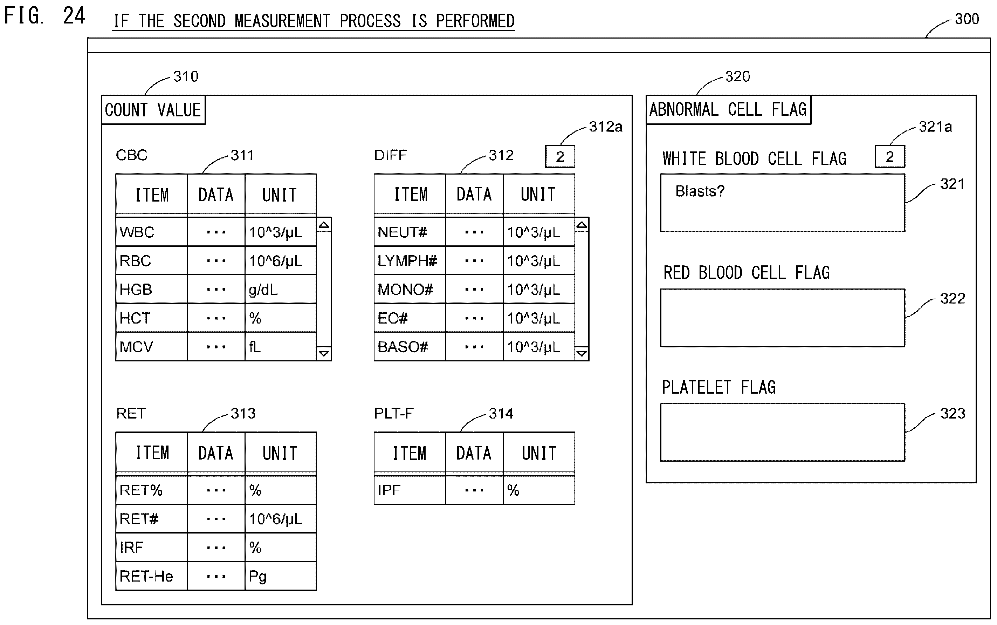

FIG.24 schematically shows a configuration of the cell analysis result screen 300 when the second measurement process is performed.

In the cell analysis result screen 300 of the present modification, as compared with Embodiment 1 shown in FIG.17, a label 312a is added to the display region 312. On the label 312a, a number of 1 or 2 is displayed. The label 312a on which "1" is displayed indicates that the count value displayed in the display region 312 is based on the first analysis result. The label 312a on which "2" is displayed indicates that the count value displayed in the display region 312 is based on the second analysis result.

In this modification, when the second measurement process is performed, the count value and the abnormal cell flag based on the first analysis result are displayed in the display regions 311, 313, 314 and the display regions 322, 323. On the other hand, a count value in the DIFF mode based on the second analysis result is displayed in the display region 312. An abnormal cell flag based on the second analysis result is displayed in the display region 321. In this case, as shown in FIG.24, "2" is displayed on the label 312a in order to indicate that the count value based on the second analysis result is displayed in the display region 312. "2" is displayed in the label 321a to indicate that the abnormal cell flag based on the second analysis result is displayed in the display region 321. That is, in this modification, a part of the cell analysis result on the basis of the first analysis result is complemented by the second analysis result.

On the other hand, when the second measurement process is not performed, a cell analysis result based on only the first analysis result is displayed on the cell analysis result screen 300. "1" is displayed on the labels 312a, 321a.

In this modification, when the second measurement process is performed, the measurement value regarding white blood cells and the abnormal cell flag in the first analysis result are replaced with the second analysis result. However, when the second measurement process is performed, the second analysis result may be displayed together with the display of the first analysis result.

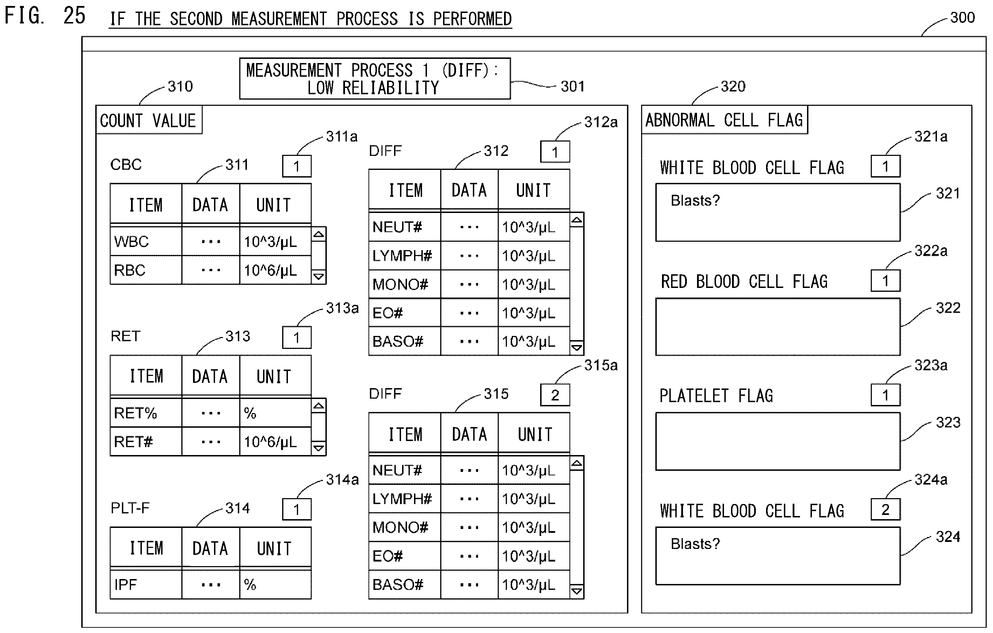

In this case, as shown in FIG.25, as compared with FIG.24, a display region 315 for displaying a count value based on the second analysis result and a display region 324 for displaying an abnormal cell flag based on the second analysis result are added. In this case, only the count value of the first analysis result is displayed in the display region 312. Only the count value of the second analysis result is displayed in the display region 315. In the display region 321, only an abnormal cell flag relating to white blood cells obtained as a result of the first analysis is displayed. In the display region 324, only an abnormal cell flag relating to white blood cells obtained as a result of the second analysis is displayed. Labels 311a to 315a, 321a to 324a indicating which of the first analysis result and the second analysis result the display content is based on are added to the display regions 311 to 315, 321 to 324, respectively.

A low-reliability label 301 indicating that the count value to be determined in step S21 in FIG.23 is low-reliability is displayed on the cell analysis result screen 300. The laboratory technician can grasp that the first analysis result includes a low-reliability result by referring to the low-reliability label 301.

In step S21 in FIG.23, the controller 31 may determine the count value by the first range and the second range wider than the first range. For example, when the count value of each white blood cell included in the first analysis result is outside the first range and within the second range, grouping of white blood cells is appropriately performed, and the count value of each classification of white blood cells included in the first analysis result is appropriate, but it is assumed that the reliability of the abnormal cell flag regarding white blood cells included in the first analysis result is low. In this case, the controller 31 performs the second measurement process, and, like Embodiment 1 shown in FIG.19, displays only the abnormal cell flag in the second analysis result on the cell analysis result screen 300. On the other hand, when the count value is outside the second range, the controller 31 performs the process of steps S13, S22, S16 in the same manner as in FIG.23, and displays the count value of the second analysis result and the abnormal cell flag on the cell analysis result screen 300.

<Effects of sample analyzer and sample analysis method according to Modification 1 of

Embodiment 1>

The acquisition of the second light information by the optical detector 200 (the second detector) and the analysis of the second light information by the controller 31 (Step S13 in FIG.23) are executed when the number of a predetermined type of cell is outside a predetermined range (when the first analysis result corresponds to a predetermined condition) (Step S21: YES in FIG.23).

According to this configuration, in the analysis of the first light information, when the white blood cell count (the number of cells of a predetermined type) is outside the predetermined range, for example, there is a possibility that grouping of cells based on the first light information is not appropriately performed. Even in this case, according to the analysis of the second light information, since an analysis result reflecting the morphology of each cell is obtained, for example, the number of each cell of white blood cells in the sample can be accurately acquired.

The predetermined range is a numerical range in which the reliability of the analysis result is maintained.

According to this configuration, when the reliability of the number of a predetermined type of cell based on the first analysis result is not maintained, acquisition and analysis of the second light information are performed. Accordingly, on the basis of the second analysis result, for example, the number of each cell of white blood cells in the sample can be accurately acquired.

When the first analysis result indicates that the number of cells of a predetermined type is outside a predetermined range (step S21: YES in FIG.23), the controller 31 generates a cell analysis result including the number of cells of a predetermined type based on the second analysis result (step S22 in FIG.23).

According to this configuration, for example, the number of each cell of white blood cells is generated as the number of a predetermined type of cell based on the second analysis result. Accordingly, the laboratory technician can accurately grasp the number of the predetermined type of cell.

<Modification 2 of Embodiment 1>

In Modification 1 of Embodiment 1, when the second measurement process is performed, not only the second analysis result but also the first analysis result are displayed as the cell analysis result, but not limited thereto, and the first analysis result may not be displayed.

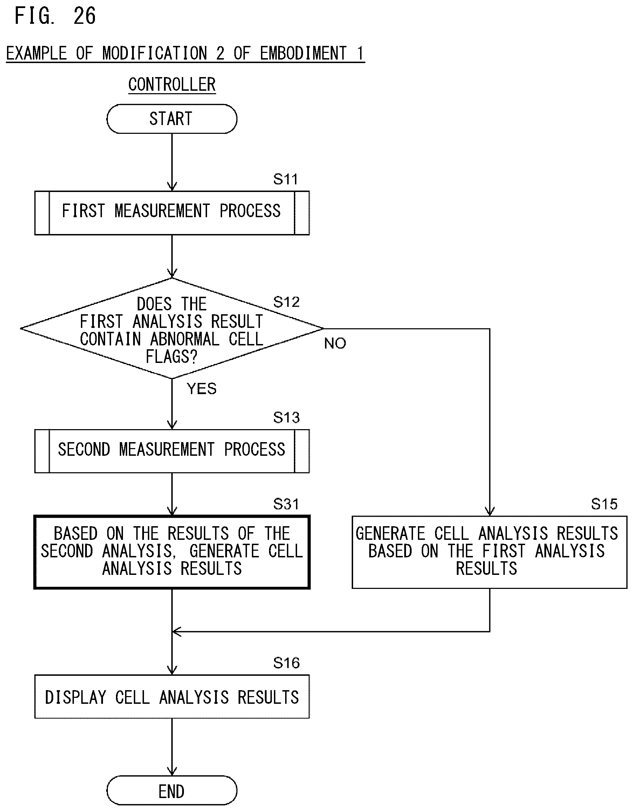

FIG.26 is a flowchart showing control processing regarding measurement by the controller 30.

In the control processing of this modification, in place of step S14, step S31 is added as compared with Embodiment 1 shown in FIG.14. In step S31, the controller 31 of the controller 30 generates a cell analysis result based on only the second analysis result.

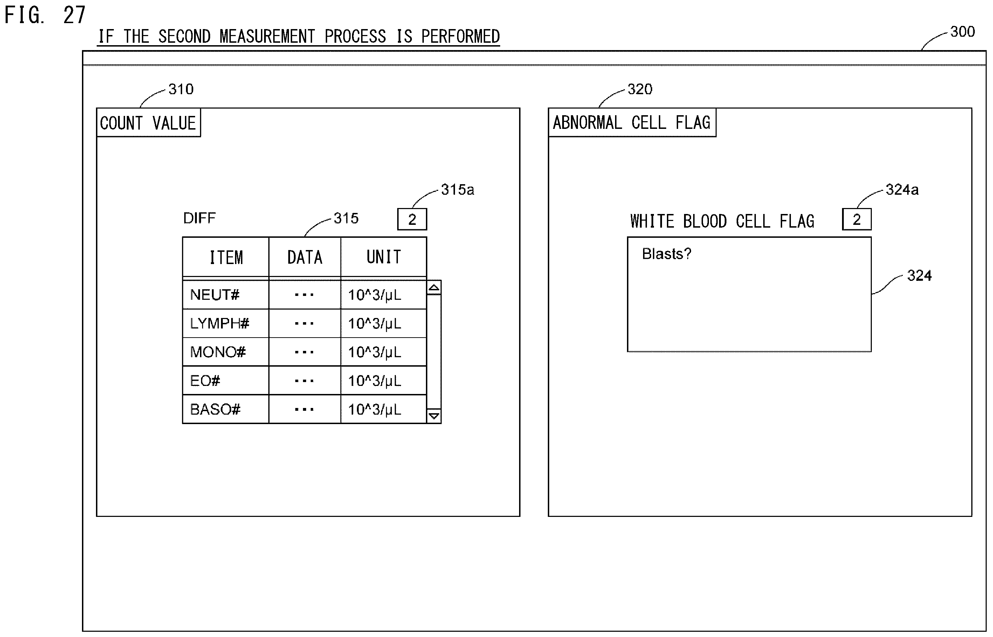

FIG.27 schematically shows a configuration of the cell analysis result screen 300 when the second measurement process is performed.

In this modification, only the display region 315 for displaying the count value based on the second analysis result shown in FIG.25 and the label 315a added to the display region 315 are displayed in the count value display region 310. In this modification, only the display region 324 for displaying the abnormal cell flag regarding white blood cells based on the second analysis result shown in FIG.25, and the label 324a added to the display region 324 are displayed in the abnormal cell flag display region 320. That is, in this modification, when the second measurement process is performed, only the second analysis result is displayed on the cell analysis result screen 300.

Also in this modification, according to the second analysis result, for example, the number of samples which are false positives is reduced. Therefore, the laboratory technician can reduce the number of times of preparation of a smear or the like. When preparing a smear, etc., a laboratory technician can inspect a smear, etc., with reference to a more accurate cell analysis result. Therefore, the burden on the laboratory technician can be reduced.

<Embodiment 2>

In Embodiment 1, the first measurement process and the second measurement process are performed by the first measurement unit 10 and the second measurement unit 20, respectively. On the other hand, in Embodiment 2, both the first measurement process and the second measurement process are performed by the third measurement unit 70. The configuration and processing of Embodiment 2 are the same as those of Embodiment 1 except that reference is made below.

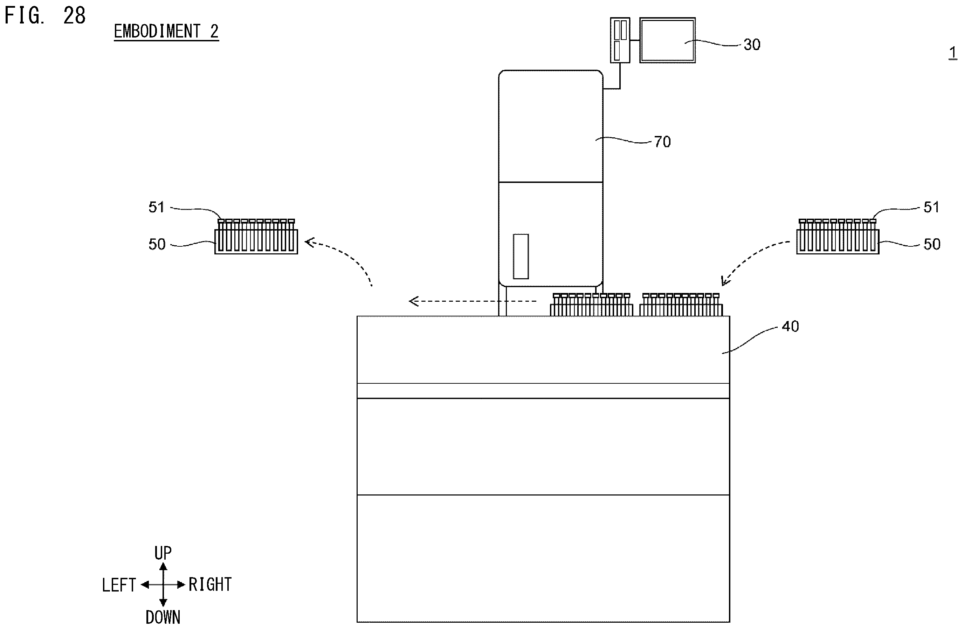

FIG.28 is a front view schematically showing a configuration of a sample analyzer 1.

The sample analyzer 1 of Embodiment 2 includes the third measurement unit 70 in place of the first measurement unit 10 and the second measurement unit 20 as compared with Embodiment 1 shown in FIG.1.

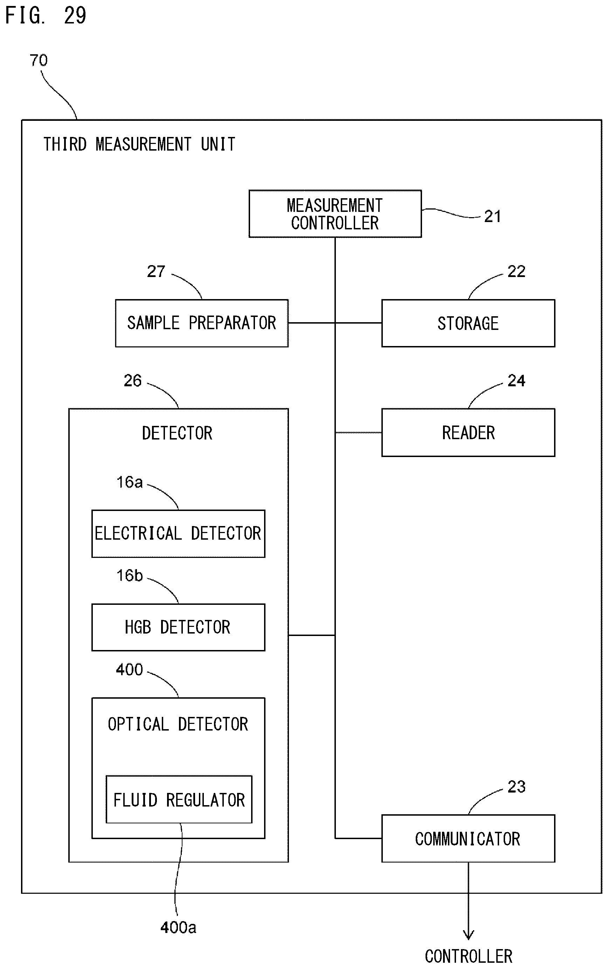

FIG.29 is a block diagram showing a functional configuration of the third measurement unit 70.

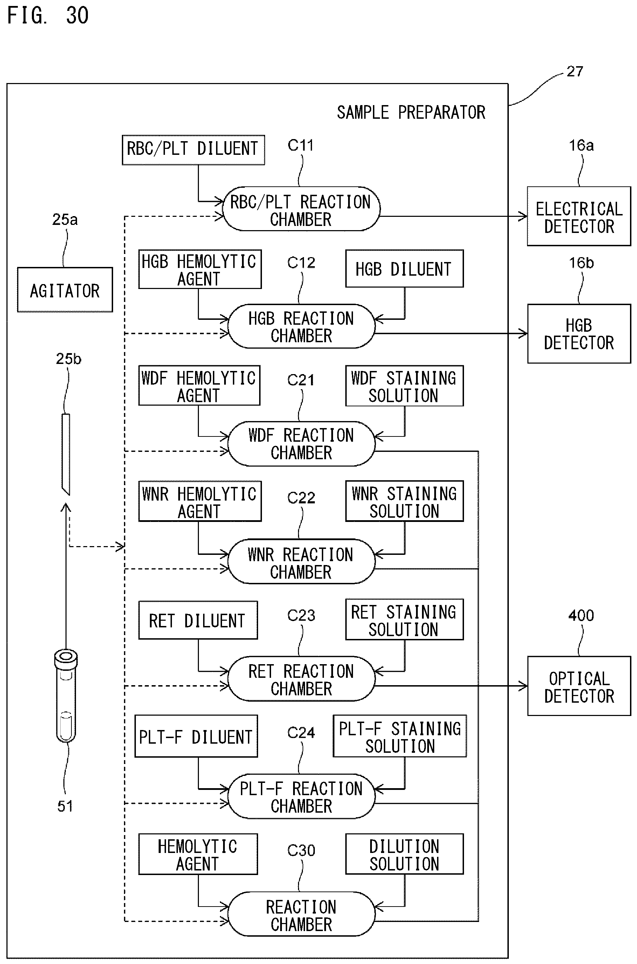

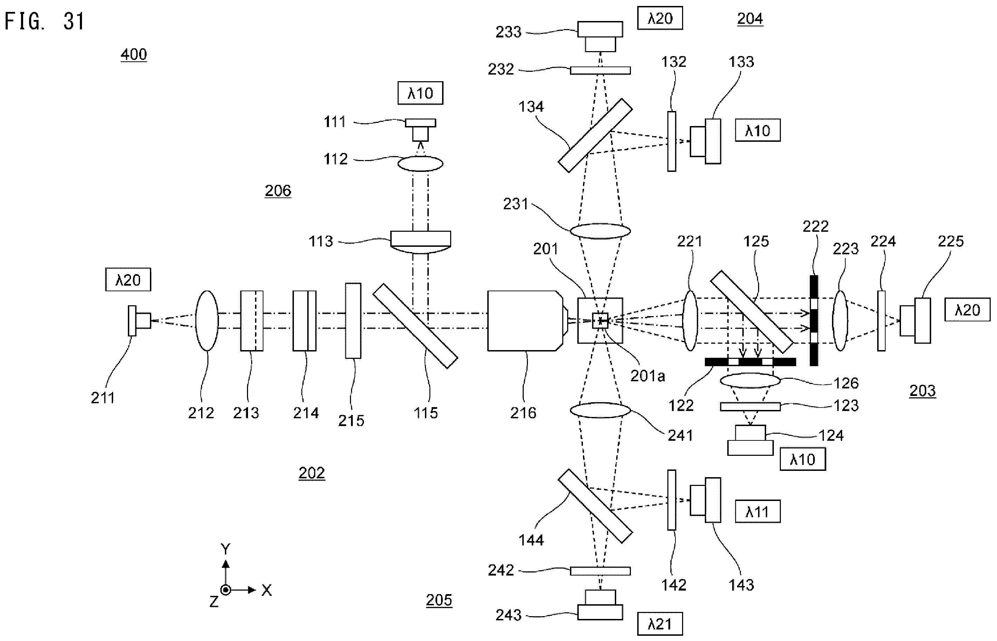

The third measurement unit 70 includes the electrical detector 16a and the HGB detector 16b shown in FIG.2 as compared with the second measurement unit 20 of Embodiment 1 shown in FIG.6. The third measurement unit 70 includes a sample preparator 27 and an optical detector 400 in place of the sample preparator 25 and the optical detector 200. The fluid adjustment part 400a in the optical detector 400 adjusts the flow rate per unit time of the measurement sample in the flow cell 201 of the optical detector 400. The fluid adjustment part 400a is configured in the same manner as the fluid adjustment part 200a in FIG.6. The sample preparator 27 will be described later with reference to FIG.30. The optical system of the optical detector 400 will be described later with reference to FIG.31.

The electrical detector 16a and the HGB detector 16b perform signal processing on the detection signal acquired by the measurement, and output the detection signal (measurement information) after the signal processing to the measurement controller 21. The optical detector 400 performs signal processing on the detection signal acquired by measurement, and outputs the first light information and the second light information to the measurement controller 21. The measurement controller 21 causes the storage 22 to store the measurement information, the first light information, and the second light information outputted from the detector 26 in association with the sample ID read by the reading part 24. When the measurement of one sample is completed, the measurement controller 21 transmits the measurement information, the first light information and the second light information, and the corresponding sample ID to the controller 30.

FIG.30 is a block diagram showing a functional configuration of the sample preparator 27.

The sample preparator 27 includes the reaction chambers C11, C12, C21 to C24 shown in FIG.3 as compared with the sample preparator 25 of Embodiment 1 shown in FIG.7. The reaction chambers C11, C12 are connected to the electrical detector 16a and the HGB detector 16b, respectively. The reaction chambers C21 to C24, C30 are respectively connected to the optical detector 400.

The aspiration tube 25b aspirates the sample from the inside of the sample container 51 agitated by the agitator 25a. The aspiration tube 25b appropriately dispenses the aspirated sample into the reaction chambers C11, C12, C21 to C24, C30.

The measurement samples prepared in the reaction chambers C21 to C24, C30 are individually caused to flow into the flow cell 201, and are measured by the optical measurement unit 400. The optical detector 400 measures the measurement sample prepared in the reaction chambers C21 to C24, and acquires a detection signal. The optical detector 400 performs signal processing on the acquired detection signal and acquires the first light information. The optical detector 400 measures the measurement sample prepared in the reaction chamber C30, and acquires a detection signal. The optical detector 400 performs signal processing on the acquired detection signal and acquires the second light information.

FIG.31 schematically shows a configuration of the optical detector 400.

The optical detector 400 includes, as compared with the optical detector 200 in FIG.8, the light source 111, the collimator lens 112, the cylindrical lens 113, the beam stopper 122, the optical filters 123, 132, 142, and the light receivers 124, 133, 143 of the optical detector 100 shown in FIG.4. The optical detector 400 further includes dichroic mirrors 115, 125, 134, 144 and a condenser lens 126.

The dichroic mirror 115 reflects a light having the wavelength $\lambda 10$ from the light source 111. The dichroic mirror 115 allows a light having the wavelength $\lambda 20$ from the light source 211 to be transmitted therethrough. Due to the dichroic mirror 115, the optical axis of the light from the light source 111 and the central axis of the light from the diffractive optical element 215 coincide with each other. The condenser lens 216 condenses the light from the light sources 111, 211 onto the flow path 201a of the flow cell 201. The condenser lens 216 is configured to suppress chromatic aberration with respect to the lights having the wavelengths $\lambda 10$, $\lambda 20$. The beam spot BS (see FIG.5) of the first illumination light from the light source 111 is positioned at the center position of the irradiation area R shown in FIG.9. Similarly to FIG.9, the second illumination light from the light source 211 is irradiated to the irradiation area R.

The collimator lens 112, the cylindrical lens 113, the dichroic mirror 115, and the condenser lens 216 constitute an irradiation optical system 206. The irradiation optical system 206 applies the light from the light source 111 as the first illumination light to the cell passing through the flow cell 201.

As in Embodiment 1, when the first illumination light having the wavelength $\lambda 10$ is irradiated to a cell flowing in the flow cell 201, a forward scattered light having the wavelength $\lambda 10$, a side scattered light having the wavelength $\lambda 10$, and a fluorescence having the wavelength $\lambda 11$ are generated from the portion of the cell to which the light has been irradiated. When the second illumination light having the wavelength $\lambda 20$ is irradiated to a cell flowing in the flow cell 201, a forward scattered light having the wavelength $\lambda 20$, a side scattered light having the wavelength $\lambda 20$, and a fluorescence having the wavelength $\lambda 21$ are generated from the portion of the cell to which the light has been irradiated.

The dichroic mirror 125 reflects forward scattered light based on the first illumination light and the first illumination light. The dichroic mirror 125 allows forward scattered light based on the second illumination light and the second illumination light to be transmitted therethrough. The first illumination light and the second illumination light that have passed through the flow cell 201 are blocked by the beam stoppers 122, 222, respectively. The condenser lens 126 condenses forward scattered light derived from the second illumination light that is not blocked by the beam stopper 122, onto the light receiver 124. The dichroic mirror 134 reflects side scattered light based on the first illumination light and allows side scattered light based on the second illumination light to be transmitted therethrough. The dichroic mirror 144 reflects fluorescence based on the first illumination light and allows fluorescence based on the second illumination light to be transmitted therethrough. The light receivers 124, 133, 143, 225, 233, 243 receive the corresponding light and output detection signals.

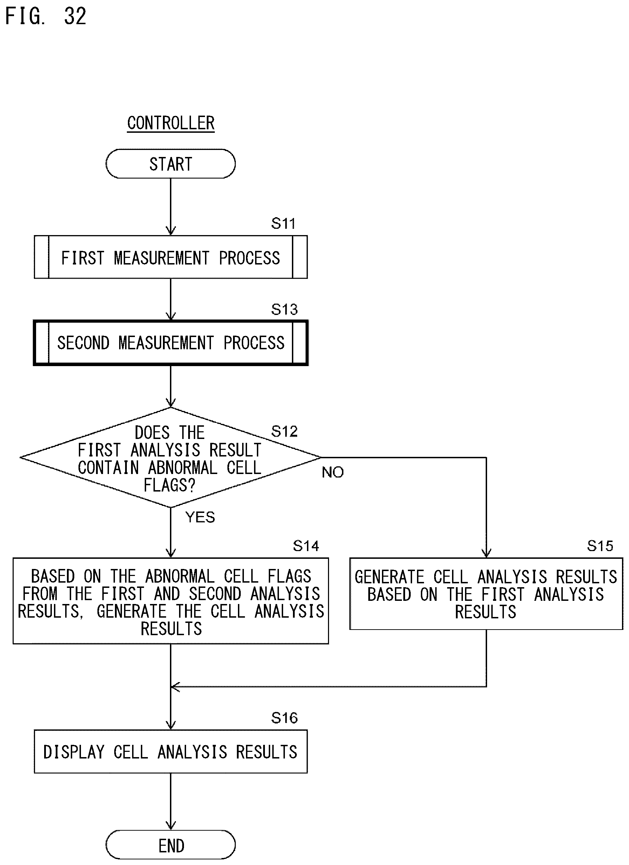

FIG.32 is a flowchart showing control processing regarding measurement by the controller 30.

As compared with Embodiment 1 shown in FIG.14, the second measurement process in step S13 is executed between step S11 and step S12 in the control process in FIG.32. That is, in Embodiment 2, the second measurement process is executed regardless of the first analysis result. **In** the first measurement processing of Embodiment 2, the third measurement unit 70 performs the same processing as in FIG.15, and in the second measurement processing of Embodiment 2, the third measurement unit 70 performs the same processing as in FIG.16.

<Effects of sample analyzer and sample analysis method according to Embodiment 2>

The acquisition of the second light information by the optical detector 400 (the second detector) (Step S202 in FIG. 16) and the generation of the second analysis result by the controller 31 (Step S203 in FIG.16) are executed regardless of the first analysis result.

According to this configuration, it is unnecessary to determine whether to perform the second measurement process, so that the first measurement process and the second measurement process can be smoothly executed. Since both the first measurement process and the second measurement process are executed, a wide range of results can be acquired as a cell analysis result, for example.

When the first analysis result includes the abnormal cell flag (when the first analysis result satisfies a predetermined condition) (Step S12 in FIG.32: YES), the controller 31 generates a cell analysis result based on at least the second analysis result (Step S14 in FIG.32).

According to this configuration, when the first analysis result satisfies the predetermined condition, the cell analysis result is generated on the basis of at least the second analysis result. Accordingly, the laboratory technician can accurately grasp the state of the sample with reference to the cell analysis result based on the second analysis result with high accuracy.

When the first analysis result includes the abnormal cell flag (when the first analysis result satisfies a predetermined condition) (Step S12 in FIG.32: YES), the controller 31 generates a cell analysis result based on the first analysis result and the second analysis result (Step S14 in FIG.32).

According to this configuration, when the first analysis result satisfies the predetermined condition, the cell analysis result is generated on the basis of both the first analysis result and the second analysis result. Accordingly, as compared with a case where the cell analysis result is generated on the basis of only the second analysis result, an analysis result reflecting the state of the sample more accurately can be generated.

The sample analyzer 1 includes the flow cell 201. The optical detector 400 (first detector) interrogates the cells flowing in the flow cell 201 through the beam spot BS to obtain the first light information. The optical detector 400 (second detector) interrogates the cell flowing in the flow cell 201 through the irradiation area R of the second illumination light in which the plurality of distributed lights generated by diffracting a light using the diffractive optical element 215, thereby obtaining the second light information.

According to this configuration, since the two measurements can be performed in the common flow cell 201, the configuration for acquiring the first light information and the second light information can be simplified.

In Embodiment 2, similarly to Modification 1 of Embodiment 1, Steps S21, S22 in FIG.23 may be executed in place of Steps S12, S14 in FIG.32, or Step S31 in FIG.26 may be executed in place of Step S14 in FIG.32, similarly to Modification 2 in Embodiment 1.

<Modification 1 of Embodiment 2>

In Embodiment 2, as shown in FIG.32, the first analysis result is determined in step S12, and one of steps S14, S15 is executed according to the first analysis result. The present invention is not limited thereto, and the determination in step S12 may be omitted.

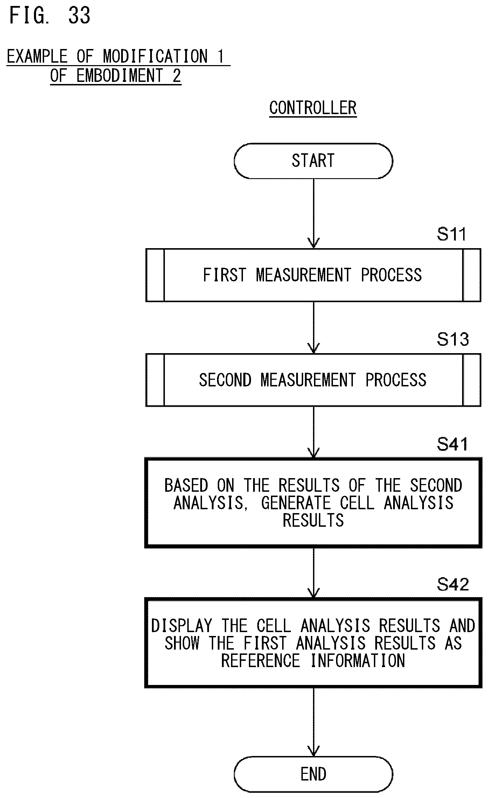

FIG.33 is a flowchart showing a control process regarding measurement by the controller 30.

In the control processing of this modification, steps S41, S42 are added in place of steps S12, S14 to S16 as compared with Embodiment 2 shown in FIG.32.

In step S41, the controller 31 of the controller 30 generates a cell analysis result based on the second analysis result. The cell analysis result in this case includes at least one of the count value and the abnormal cell flag included in the second analysis result. In step S42, the controller 31 displays the cell analysis result generated in step S41 on the cell analysis result screen 300, and displays the first analysis result acquired in the first measurement process in step S11 as reference information. In this case, the first analysis result may be additionally displayed on the cell analysis result screen 300 when a button provided on the cell analysis result screen 300 is operated, for example. The first analysis result may be displayed together with a label indicating it is reference information on the cell analysis result screen 300, for example.

In steps S41 and S42 in FIG.33, a cell analysis result is generated based on the second analysis result, and the first analysis result is displayed as reference information. However, a cell analysis result may be generated based on the first analysis result, and the second analysis result may be displayed as reference information. For example, whether to generate the cell analysis result by the first analysis result or the second analysis result may be selectively determined by the controller 30. For example, the controller 30 may selectively determine which of the first analysis result and the second analysis result is to generate the cell analysis result according to a setting or an operation by the laboratory technician.

<Modification 2 of Embodiment 2>

In Embodiment 2, the measurement sample to be used in the second measurement process is prepared in the reaction chamber C30. However, not limited thereto, an RBC/PLT measurement sample prepared in the reaction chamber C11 may be used in the second measurement process.

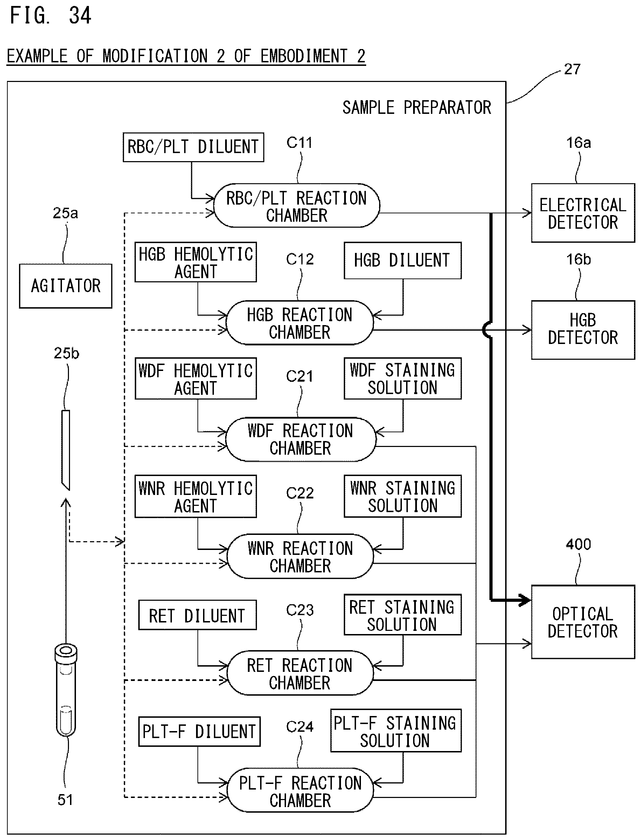

FIG.34 is a block diagram showing a functional configuration of the sample preparator 27.

In the sample preparator 27 of the present modification, as compared with Embodiment 2 shown in FIG.30, the reaction chamber C30 is omitted, and the reaction chamber C11 and the optical detector 400 are connected. In this modification, in the second measurement process, the RBC/PLT measurement sample prepared in the reaction chamber C11 is caused to flow to the flow cell 201. In the flow cell 201, the second illumination light is irradiated to the measurement sample, and the second light information is acquired. In this case, since no fluorescence based on the second illumination light is acquired, the second analysis result is acquired by analysis of the second light information based on the forward scattered light and the side scattered light.

According to this modification, since the reaction chamber C30 can be omitted, the configuration of the sample analyzer 1 can be simplified.

In this modification, in the second measurement processing, the RBC/PLT measurement sample is caused to flow in the flow cell 201 and the second light information is acquired. However, not limited thereto, the WDF measurement sample may be caused to flow in the flow cell 201 and the second light information may be acquired.

In this case, the second measurement process may be performed simultaneously with the first measurement process. That is, when the WDF measurement sample prepared in the reaction chamber C21 is caused to flow into the flow cell 201, the first light information and the second light information regarding a white blood cell may be simultaneously acquired. In this case, however, in order to appropriately acquire the second light information, it is necessary to reduce the flow rate per unit time of the WDF measurement sample flowing in the flow cell 201 under the control of the fluid adjustment part 400a as compared with a case where only the first light information is acquired from the WDF measurement sample. However, since the first light information and the second light information regarding white blood cells can be simultaneously acquired, the throughput of sample analysis can be shortened.

<Embodiment 3>

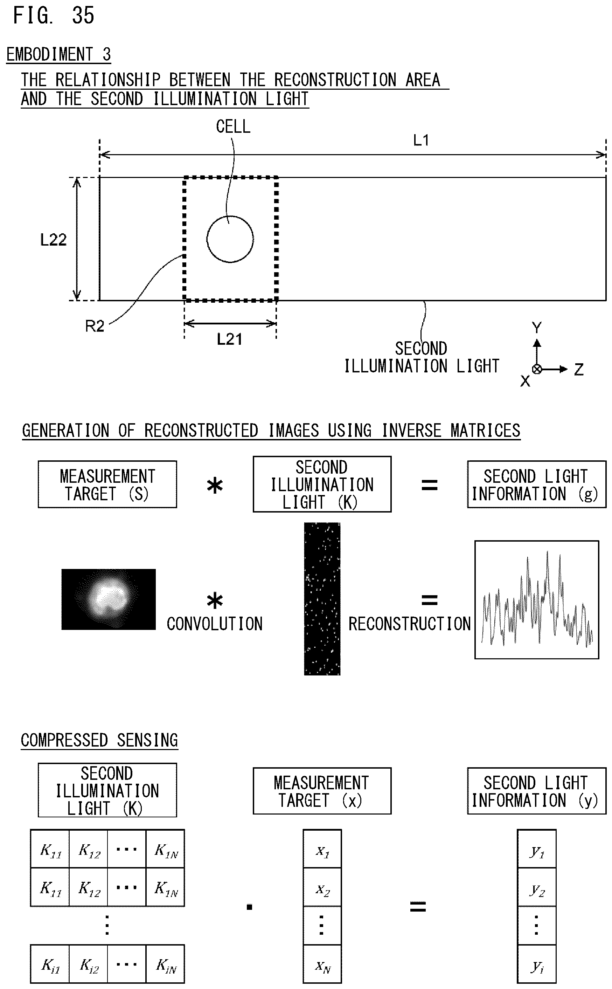

In Embodiments 1 and 2, the count value and the abnormal cell flag are generated on the basis of the second light information, but as shown in FIG.35, a reconstructed image of a cell may be generated on the basis of the second light information.

The upper part of FIG.35 schematically shows a state in which the second illumination light is irradiated to the irradiation position of the flow cell 201.

At the irradiation position, the length of the second illumination light in the Z-axis direction (the flow direction of the measurement sample) is L1. At the irradiation position, a reconstruction range R2 for generating a reconstructed image of a cell to be measured is set. The length of the reconstruction range R2 in the Z-axis direction is L21, and the length of the reconstruction range R2 in the Y-axis direction is L22.

Assuming that the value of the reconstruction region is $L21 \times L22$, when the value of the reconstruction region is equal to or less than the length L1 of the second illumination light, the controller 31 generates a reconstructed image by an inverse matrix as shown in the middle part of FIG.35. On the other hand, when the value of the reconstruction region is larger than the length L1, as shown in the lower part of FIG.35, the controller 31 generates the reconstructed image by compression sensing. Which of the inverse matrix and the compression sensing is used to generate the reconstructed image is determined in advance according to the size of the target cell and the length L1 of the second illumination light.

The middle part of FIG.35 schematically shows a procedure of generating a reconstructed image by an inverse matrix.

Assuming that a matrix indicating the cell to be measured is S, a matrix indicating distributed light included in the second illumination light is K, and a matrix indicating the second light information is g, the second light information is information based on the light generated when the second illumination light is irradiated to the cell to be measured, and therefore, the relationship between S, K, and g is expressed by the following equation (1). Therefore, the matrix S indicating the cell is acquired by the following equation (2) with the inverse matrix of K as the $K^{-1}$. The controller 31 generates a reconstructed image on the basis of the matrix S indicating the cell.

$$S*K=g \quad \ldots(1)$$

$$S=g*K^{-1} \quad \ldots(2)$$

The lower part of FIG.35 schematically shows a procedure of generating a reconstructed image by compression sensing.

Assuming that a matrix indicating distributed light included in the second illumination light is K, a matrix indicating a reconstructed image of the cell to be measured is x, and a matrix indicating the second light information is y, the reconstructed image is acquired by the following equation (3). In the following equation (3), argmin indicates that the equation in parentheses is minimized. The first half of the term in parentheses indicates the least squares solution, and the second half of the term in parentheses is a term to which a sparse condition called a regularization term is added. $\lambda$ is a variable that determines the ratio of the least squares solution to the regularization term. The controller 31 generates a reconstructed image on the basis of a matrix x indicating the reconstructed image.

[Mathematical formula 1]

$$f(x) = argmin\left\{\frac{1}{2}\|y - Kx\|_2^2 + \lambda\Phi(x)\right\} \cdots (3)$$

In the inverse matrix and the compression sensing, the second light information may be based on any of a forward scattered light, a side scattered light, and a fluorescence. When the second light information based on the forward scattered light, the side scattered light, and the fluorescence is used, respectively, a reconstructed image based on the forward scattered light, the side scattered light, and the fluorescence is generated.

In Embodiment 3, when the acquisition of the second light information is completed in the second measurement process, the controller 31 of the controller 30 generates reconstructed images regarding all cells in the sample on the basis of the second light information. The controller 31 generates additional information of each cell on the basis of the generated reconstructed images. The additional information is, for example, a cell size, a nuclear size, an amount of granules, a level of basophilicity, an NC ratio, and the like.

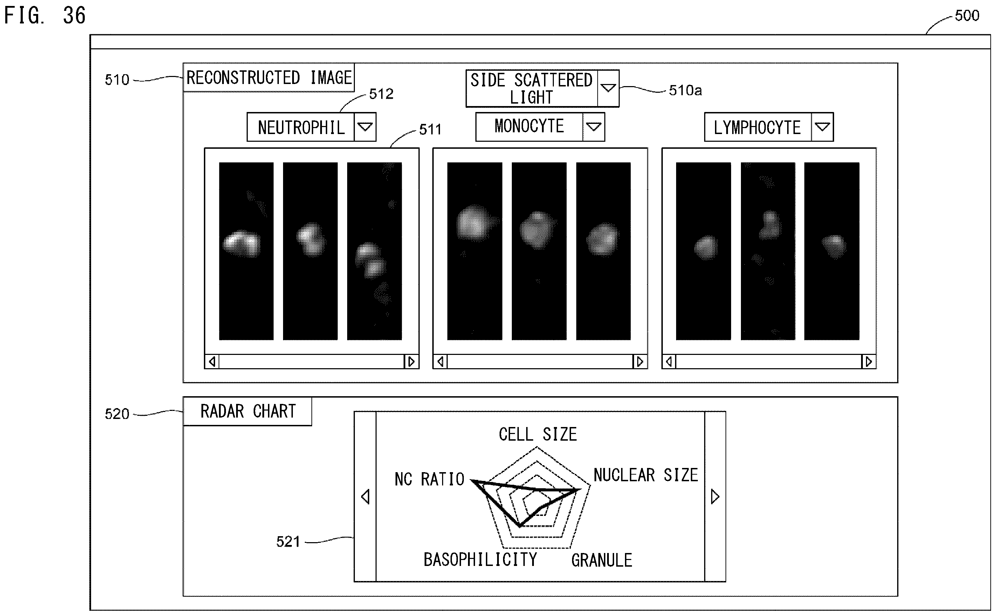

FIG.36 schematically shows a configuration of a reconstructed image display screen 500 for displaying a reconstructed image.

When the laboratory technician operates the input device 35 to input a display instruction, the controller 31 of the controller 30 displays the reconstructed image display screen 500 on the display 34. The reconstructed image display screen 500 includes a reconstructed image display region 510 and a radar chart display region 520.

The reconstructed image display region 510 includes a pull-down menu 510a for selecting a type of light serving as a source of the reconstructed image, a region 511 for displaying a plurality of reconstructed images, and a pull-down menu 512 for selecting a type of cell to be displayed in the region 511. In the example shown in FIG.36, three regions 511 are provided in the reconstructed image display region 510. In each region 511, reconstructed images corresponding to neutrophils, monocytes, and lymphocytes, respectively, are displayed. Since a side scattered light is selected in the pull-down menu 510a, the reconstructed image displayed in each region 511 is a reconstructed image based on the side scattered light.

The radar chart display region 520 includes a region 521 in which additional information for each cell generated on the basis of the reconstructed image is indicated by a radar chart.

<Effects of sample analyzer and sample analysis method according to Embodiment 3>

The controller 31 generates a reconstructed image visualizing the cell in the sample based on the second light information.

According to this configuration, the laboratory technician can grasp the shape of the cell in more detail by referring to the reconstructed image in which the cell is visualized together with the cell analysis result. Further, the laboratory technician can grasp the state of the cell in more detail by referring to the radar chart based on the additional information generated on the basis of the reconstructed image. Accordingly, the burden on the laboratory technician can be reduced.

<Other Modification>

In Embodiments 1 to 3, one first illumination light having a single beam spot BS is irradiated to a cell flowing in a flow cell, but a plurality of first illumination lights having a single beam spot may be irradiated to a cell flowing in a flow cell. That is, in the optical detector 100 shown in FIG.4, another first illumination light having a single beam spot may be irradiated to a cell flowing in the flow cell 101 on the basis of light from another light source. In the optical detector 400 shown in FIG.31, another first illumination light having a single beam spot may be irradiated to a cell flowing in the flow cell 201 on the basis of light from another light source. The wavelength of the light irradiated from the other light source is preferably different from the wavelength of the light irradiated from the light source 111 or the light source 211.

In Embodiments 1 to 3, the diffractive optical element 215 may have a condensing effect. In this case, for example, the diffraction pattern itself formed at the diffractive optical element 215 may have a condensing effect. In this case, for example, a diffraction pattern for generating distributed light may be formed on the incidence surface of the diffractive optical element 215, and a pattern having a lens effect or a Fresnel lens may be formed on the light-outputting surface of the diffractive optical element 215. In Embodiment 1, when the diffractive optical element 215 has a condensing effect, the condenser lens 216 may be omitted.

In Embodiments 1 to 3, the diffractive optical element 215 is a transmission-type diffractive optical element, but

**EP 4 641 169 A1**

may be a reflection-type diffractive optical element.

In Embodiments 1 to 3, the calculation part 32 of the controller 30 classifies a cell by the AI algorithm 62 on the basis of the detection signal from the light receivers 225, 233, 243. However, not limited thereto, the pattern of the detection signal from the light receivers 225, 233, 243 may be collated with a pattern stored in the storage 33 in advance, whereby the cell may be classified.

In Embodiments 1 to 3, only the abnormal cell flag is displayed as an analysis result regarding the abnormal cell, but a count value of the abnormal cell included in the second analysis result may be displayed together.

In Embodiments 1 to 3, in the second measurement process, count values and abnormal cell flags regarding neutrophils, normal lymphocytes, monocytes, eosinophils, basophils, blasts, abnormal lymphocytes, atypical lymphocytes, immature granulocytes, nucleated red blood cells are acquired, but count values and abnormal cell flags regarding cells other than these cells may be acquired.

In Embodiments 1 to 3, the sample is blood, but the present invention is not limited thereto, and may be a bodily fluid other than blood.

In Embodiment 1, when the first analysis result corresponds to the predetermined condition shown in Step S12 or Step S21, the second measurement process is executed. However, not limited thereto, and as shown in FIG.32 or FIG.33, the second measurement process may be executed regardless of the first analysis result. Also. In Embodiment 2, the second measurement process is executed regardless of the first analysis result, but not limited thereto, and as shown in FIG.14 or FIG.23, when the first analysis result corresponds to a predetermined condition shown in Step S12 or Step S21, the second measurement process may be executed.

In Embodiment 1, the controller 31 of the controller 30 may control the conveyer 40 such that, when the first analysis result satisfies the predetermined condition shown in Step S12 or Step S21, the sample container 51 whose measurement has been performed by the first measurement unit 10 is disposed at the sample take-in position (sample provide position) by the second measurement unit 20, and when the first analysis result does not satisfy the predetermined condition, the sample container 51 passes through the second measurement unit 20.

Various modifications can be made as appropriate to the embodiments of the present invention, without departing from the scope of the technological idea defined by the claims.

The present disclosure includes following items 1-43.

Item 1. A sample analyzer that analyzes cells in a sample collected from a subject, comprising: a first measurement unit configured to interrogate the cells passing through at least one beam spot of a first illumination light to obtain first light information;

a second measurement unit configured to interrogate the cells passing through an irradiation area of a second illumination light to obtain second light information, wherein the second illumination light includes a plurality of distributed lights generated by diffracting a light using a diffractive optical element; and

a controller configured to generate a cell analysis result based on one of (1) a first analysis result based on the first light information, (2) a second analysis result based on the second light information, and (3) the first analysis result and the second analysis result.

Item 2. The sample analyzer according to item 1, wherein

the second measurement unit is configured to obtain the second light information which contains more information of individual cell than the first light information.

Item 3. The sample analyzer according to item 1 or 2, wherein

the second measurement unit is configured to obtain the second light information which contains more information regarding morphology of individual cell than the first light information.

Item 4. The sample analyzer according to any one of items 1 to 3, wherein the controller is configured to generate the first analysis result by a first analysis method and generate the second analysis result by a second analysis method, and

the first analysis method and the second analysis method are different from each other.

Item 5. The sample analyzer according to any one of items 1 to 4, wherein the controller is configured to generate the cell analysis result by selectively determining a basis of analysis from(1) the first analysis result, (2) the second analysis result, or (3) the first analysis result and the second analysis result.

Item 6. The sample analyzer according to any one of items 1 to 5, wherein the controller is configured to generate the cell analysis result based on the first analysis result and the second analysis result by complementing the first analysis result with the second analysis result.

Item 7. The sample analyzer according to any one of items 1 to 6, further comprising a conveyor to convey the sample, wherein

the first and second measurement units are configured to interrogate the conveyed sample.

Item 8. The sample analyzer according to any one of items 1 to 7, wherein the controller is configured as being capable of controlling operations of the first and second measurement units so that a frequency of measurement by the second measurement unit is lower than a frequency of measurement by the first measurement unit.
Item 9. The sample analyzer according to any one of items 1 to 8, wherein
the controller is configured to

control operations of the first and second measurement units so that a frequency of measurement by the second measurement unit is lower than a frequency of measurement by the first measurement unit, and
generate the cell analysis result based on the first analysis result and the second analysis result by complementing the first analysis result with the second analysis result.

Item 10. The sample analyzer according to any one of items 1 to 9, wherein the controller is configured to generate the second analysis result with an artificial intelligence algorithm.
Item 11. The sample analyzer according to any one of items 1 to 10, wherein
the controller is configured to generate the cell analysis result by selectively determining a basis of analysis from (1) the first analysis result, (2) the second analysis result, or (3) the first analysis result and the second analysis result, so that a frequency of measurement by the second measurement unit is lower than a frequency of measurement by the first measurement unit.
Item 12. The sample analyzer according to any one of items 1 to 11, wherein

a measurement of the second light information by the second measurement unit and a generation of the second analysis result by the controller are executed in response to the first analysis result satisfying a predetermined condition, and
the controller is configured to generate the cell analysis result based on at least the second analysis result in response to the first analysis result satisfying the predetermined condition.

Item 13. The sample analyzer according to item 12, wherein
the predetermined condition is satisfied by the first analysis result indicative of a presence of an abnormal cell in the sample.
Item 14. The sample analyzer according to item 12 or 13, wherein
the predetermined condition is satisfied by at least one of:

- the first analysis result indicative of a presence of a blast cell;
- the first analysis result indicative of a presence of an abnormal lymphocyte;
- the first analysis result indicative of a presence of an atypical lymphocyte
- the first analysis result indicative of a presence of an immature granulocyte
- the first analysis result indicative of an abnormality of classification of white blood cells
- the first analysis result indicative of a presence of a nucleated red blood cell.

Item 15. The sample analyzer according to item 13 or 14, wherein
the controller is configured to generate the cell analysis result indicating a presence of an abnormal cell based on the second analysis result, in response to the first analysis result satisfying the predetermined condition and the second analysis result indicating the presence of the abnormal cell.
Item 16. The sample analyzer according to any one of items 13 to 15, wherein
the controller is configured to generate the cell analysis result indicating an absence of the abnormal cell based on the second analysis result, in response to the first analysis result satisfying the predetermined condition and the second analysis result indicating the absence of the abnormal cell.
Item 17. The sample analyzer according to item any one of items 12 to 16, wherein
the predetermined condition is satisfied by the first analysis result representing a number of a certain type of cell being outside a predetermined numerical range.
Item 18. The sample analyzer according to item 17, wherein
the predetermined numerical range defines a range in which a reliability of the first analysis result is guaranteed.
Item 19. The sample analyzer according to item 17 or 18, wherein
the controller is configured to generate the cell analysis result including a number of the predetermined type of cell based on the second analysis result, in response to the first analysis result indicating that the number of the certain type of cells is outside the predetermined numerical range.
Item 20. The sample analyzer according to any one of items 1 to 19, wherein
a measurement of the second light information by the second measurement unit and a generation of the second analysis result by the controller are executed regardless of the first analysis result.
Item 21. The sample analyzer according to any one of items 1 to 20, wherein

the controller is configured to generate the cell analysis result based on at least the second analysis result, in response to the first analysis result satisfying a predetermined condition.

Item 22. The sample analyzer according to item 21, wherein

the controller is configured to generate the cell analysis result based on the first analysis result and the second analysis result, in response to the first analysis result satisfying the predetermined condition.

Item 23. The sample analyzer according to item 21 or 22, wherein the predetermined condition is satisfied by the first analysis result indicative of a presence of an abnormal cell in the sample.

Item 24. The sample analyzer according to item 23, wherein

the predetermined condition is satisfied by at least one of:

- the first analysis result indicative of a presence of a blast
- the first analysis result indicative of a presence of an abnormal lymphocyte
- the first analysis result indicative of a presence of an atypical lymphocyte
- the first analysis result indicative of a presence of an immature granulocyte
- the first analysis result indicative of an abnormality of classification of white blood cells
- the first analysis result indicative of a presence of a nucleated red blood cell.

Item 25. The sample analyzer according to item 23 or 24, wherein

the controller is configured to generate the cell analysis result indicating a presence of an abnormal cell based on the second analysis result, in response to the first analysis result satisfying the predetermined condition and the second analysis result indicating the presence of the abnormal cell.

Item 26. The sample analyzer according to any one of items 23 to 25, wherein

the controller is configured to generate the cell analysis result indicating an absence of abnormal cell based on the second analysis result in response to the first analysis result satisfying the predetermined condition and the second analysis result indicating the absence of the abnormal cell.

Item 27. The sample analyzer according to any one of items 1 to 26, further comprising

a first flow cell and a second flow cell, wherein
the first measurement unit is configured to obtain the first light information of the cells passing through the beam spot in the flow cell, and
the second measurement unit is configured to obtain the second light information of the cells passing through the irradiation area in the flow cell.

Item 28. The sample analyzer according to any one of items 1 to 27, further comprising

a flow cell, wherein
the first measurement unit is configured to obtain the first light information of the cells passing through the beam spot in the flow cell, and
the second measurement unit is configured to obtain the second light information of the cells passing through the irradiation area in the flow cell.

Item 29. The sample analyzer according to any one of items 1 to 28, wherein

the second illumination light is a light having a structured illumination pattern.

Item 30. The sample analyzer according to any one of items 1 to 29, wherein

the first light information includes information of scattered light and information of fluorescence from the cells irradiated with the first illumination light.

Item 31. The sample analyzer according to any one of items 1 to 30, wherein

the controller is configured to generate the first analysis result by grouping cells irradiated with the first illumination light into a plurality of cell populations, and generate the second analysis result by classifying individual cells into cell types.

Item 32. The sample analyzer according to any one of items 1 to 31, wherein

the controller is configured to control the second measurement unit to flow the cells to pass through the irradiation area of the second illumination light under a fluid condition according to the first analysis result.

Item 33. The sample analyzer according to any one of items 1 to 32, wherein

the controller is configured to generate an image visualizing the cell in the sample based on the second light information.

Item 34. A sample analysis method to analyze cells in a sample collected from a subject, comprising:

acquiring first light information of the cells passing through at least one beam spot of a first illumination light;

acquiring second light information of the cells passing through an irradiation area of a second illumination light, wherein the second illumination light includes a plurality of distributed lights generated by diffracting a light using a diffractive optical element; and

generating a cell analysis result based on one of (1) a first analysis result based on the first light information, (2) a second analysis result based on the second light information, and (3) the first analysis result and the second analysis result.

Item 35. The sample analysis method according to item 34, wherein
the second light information obtained from individual cell contains more information than the first light information obtained from individual cell.

Item 36. The sample analysis method according to item 34 or 35, wherein
the second light information obtained from individual cell contains more information regarding cell morphology than the first light information obtained from individual cell.

Item 37. The sample analysis method according to any one of items 34 to 36, further comprising generating the first analysis result by a first analysis method, and
generating the second analysis result by a second analysis method, wherein the first analysis method and the second analysis method are different from each other.

Item 38. The sample analysis method according to any one of items 34 to 37, wherein
the generating the cell analysis result comprises generating the cell analysis result selectively on the basis of (1) the first analysis result (2) the second analysis result, or (3) the first analysis result and the second analysis result.

Item 39. The sample analysis method according to any one of items 34 to 38, wherein
the generating the cell analysis result comprises generating the cell analysis result based on the first analysis result and the second analysis result by complementing the first analysis result with the second analysis result.

Item 40. The sample analysis method according to any one of items 34 to 39, wherein
in the acquiring the first light information and the acquiring the second light information, the sample conveyed by a conveyer is interrogated.

Item 41. The sample analysis method according to any one of items 34 to 40, wherein
a frequency of measurement of the second light information is lower than a frequency of the measurement of the first light information.

Item 42. The sample analysis method according to any one of items 34 to 41, further comprising generating the second analysis result with an artificial intelligence algorithm.

Item 43. The sample analysis method according to any one of items 34 to 42, wherein
the generating the cell analysis result comprises generating the cell analysis result selectively on the basis of , determining whether to select (1) the first analysis result (2) the second analysis result, or (3) the first analysis result and the second analysis result, so that a frequency of measurement of the second light information is lower than a frequency of measurement of the first light information .

**Claims**

1. A sample analyzer that analyzes cells in a sample collected from a subject, comprising:

   a first measurement unit configured to interrogate the cells passing through at least one beam spot of a first illumination light to obtain first light information;
   a second measurement unit configured to interrogate the cells passing through an irradiation area of a second illumination light to obtain second light information, wherein the second illumination light includes a plurality of distributed lights generated by diffracting a light using a diffractive optical element; and
   a controller configured to generate a cell analysis result based on one of (1) a first analysis result based on the first light information, (2) a second analysis result based on the second light information, and (3) the first analysis result and the second analysis result.

2. The sample analyzer according to claim 1, wherein
   the second measurement unit is configured to obtain the second light information which contains more information of individual cell than the first light information.

3. The sample analyzer according to claim 1 or 2, wherein
   the second measurement unit is configured to obtain the second light information which contains more information regarding morphology of individual cell than the first light information.

4. The sample analyzer according to any one of claims 1 to 3, wherein

the controller is configured to generate the first analysis result by a first analysis method and generate the second analysis result by a second analysis method, and
the first analysis method and the second analysis method are different from each other.

5. The sample analyzer according to any one of claims 1 to 4, wherein
the controller is configured to generate the cell analysis result by selectively determining a basis of analysis from(1) the first analysis result, (2) the second analysis result, or (3) the first analysis result and the second analysis result.

6. The sample analyzer according to any one of claims 1 to 5, wherein
the controller is configured to generate the cell analysis result based on the first analysis result and the second analysis result by complementing the first analysis result with the second analysis result.

7. The sample analyzer according to any one of claims 1 to 6, further comprising a conveyor
to convey the sample, wherein
the first and second measurement units are configured to interrogate the conveyed sample.

8. The sample analyzer according to any one of claims 1 to 7, wherein
the controller is configured as being capable of controlling operations of the first and second measurement units so that a frequency of measurement by the second measurement unit is lower than a frequency of measurement by the first measurement unit.

9. The sample analyzer according to any one of claims 1 to 8, wherein

a measurement of the second light information by the second measurement unit and a generation of the second analysis result by the controller are executed in response to the first analysis result satisfying a predetermined condition, and
the controller is configured to generate the cell analysis result based on at least the second analysis result in response to the first analysis result satisfying the predetermined condition.

10. The sample analyzer according to claim 9, wherein
the predetermined condition is satisfied by the first analysis result representing a number of a certain type of cell being outside a predetermined numerical range.

11. The sample analyzer according to any one of claims 1 to 10, further comprising a first flow cell and a second flow cell, wherein

the first measurement unit is configured to obtain the first light information of the cells passing through the beam spot in the flow cell, and
the second measurement unit is configured to obtain the second light information of the cells passing through the irradiation area in the flow cell.

12. The sample analyzer according to any one of claims 1 to 11, further comprising a flow cell, wherein

the first measurement unit is configured to obtain the first light information of the cells passing through the beam spot in the flow cell, and
the second measurement unit is configured to obtain the second light information of the cells passing through the irradiation area in the flow cell.

13. The sample analyzer according to any one of claims 1 to 12, wherein
the second illumination light is a light having a structured illumination pattern.

14. The sample analyzer according to any one of claims 1 to 13, wherein
the controller is configured to generate the first analysis result by grouping cells irradiated with the first illumination light into a plurality of cell populations, and generate the second analysis result by classifying individual cells into cell types.

15. The sample analyzer according to any one of claims 1 to 14, wherein

the controller is configured to control the second measurement unit to flow the cells to pass through the irradiation area of the second illumination light under a fluid condition according to the first analysis result.

FIG. 1

EMBODIMENT 1

UP
LEFT ← → RIGHT
DOWN

FIG. 2

10

FIRST MEASUREMENT UNIT

MEASUREMENT CONTROLLER — 11

15

SAMPLE PREPARATOR

12

STORAGE

16

DETECTOR

16a

ELECTRICAL DETECTOR

16b

HGB DETECTOR

100

OPTICAL DETECTOR

14

READER

COMMUNICATOR — 13

CONTROLLER

FIG. 3

FIG. 4

100

133 — λ10

132

143  142

λ11

141

131

113

λ10

101

121

122 123 124

λ10

111  112

114

101a

EP 4 641 169 A1

Y
Z X

FIG. 5

101

101a

CELL

FIRST ILLUMINATION
LIGHT

IRRADIATION
POSITION

BS

X
Y
Z

# FIG. 6

20

SECOND MEASUREMENT UNIT

MEASUREMENT CONTROLLER — 21

25 — SAMPLE PREPARATOR

22 — STORAGE

26 — DETECTOR

24 — READER

200 — OPTICAL DETECTOR

FLUID REGULATOR

200a

COMMUNICATOR — 23

CONTROLLER

FIG. 7

FIG. 8

EP 4 641 169 A1

FIG. 9

EP 4 641 169 A1

FIG. 10

CELL

SECOND
ILLUMINATION LIGHT

DISTRIBUTED LIGHT

px1

px2

EP 4 641 169 A1

40

FIG. 11

CONTROLLER

CONTROLLER — 31

34 — DISPLAY

32 — CALCULATION PART

35 — INPUT DEVICE

33 — STORAGE

COMMUNICATOR — 36

FIRST MEASUREMENT UNIT

SECOND MEASUREMENT UNIT

CONVEYOR

# FIG. 12

SCATAGRAM

GROUPING

# FIG. 13

## PRE-TRAINED AI ALGORITHM

CELL A

SECOND LIGHT
INFORMATION

61

61a

61b

61c

## TRAINED AI ALGORITHM

SECOND LIGHT
INFORMATION

62

62a

62b

62c

63

| CELL A | 90% |
|--------|-----|
| CELL B | 5%  |

CELL A

FIG. 14

CONTROLLER

```
        ┌──────────────────┐
        │      START       │
        └──────────────────┘
                 │
                 ▼                      S11
     ┌─────────────────────────────┐
     │   FIRST MEASUREMENT PROCESS  │
     └─────────────────────────────┘
                 │
                 ▼
              ╱──────────╲               S12
           ╱   DOES THE    ╲
         ╱   FIRST ANALYSIS  ╲
        ╱    RESULT CONTAIN    ╲────────── NO ──────────┐
         ╲   ABNORMAL CELL    ╱                         │
           ╲    FLAGS?      ╱                           │
              ╲──────────╱                              │
                 │ YES                                  │
                 ▼                      S13             │
     ┌─────────────────────────────┐                   │
     │  SECOND MEASUREMENT PROCESS  │                   │
     └─────────────────────────────┘                   │
                 │                                      │
                 ▼              S14                     ▼            S15
  ┌──────────────────────────────┐      ┌──────────────────────────────┐
  │ BASED ON THE ABNORMAL CELL   │      │ GENERATE CELL ANALYSIS       │
  │ FLAGS FROM THE FIRST AND     │      │ RESULTS BASED ON THE FIRST   │
  │ SECOND ANALYSIS RESULTS,     │      │ ANALYSIS RESULTS             │
  │ GENERATE THE CELL ANALYSIS   │      └──────────────────────────────┘
  │ RESULTS                      │                     │
  └──────────────────────────────┘                    │
                 │◄─────────────────────────────────────┘
                 ▼              S16
     ┌─────────────────────────────┐
     │ DISPLAY CELL ANALYSIS RESULTS│
     └─────────────────────────────┘
                 │
                 ▼
        ┌──────────────────┐
        │       END        │
        └──────────────────┘
```

FIG. 15

CONTROLLER

```
        ┌──────────────────────┐
        │   FIRST MEASUREMENT  │
        │      PROCESS         │
        └──────────┬───────────┘
                   │          S101
        ┌──────────▼───────────┐
        │ SAMPLE PREPARATION BY THE SAMPLE │
        │ PREPARATOR OF THE FIRST MEASUREMENT │
        │            UNIT      │
        └──────────┬───────────┘
                   │          S102
        ┌──────────▼───────────┐
        │ ACQUISITION OF MEASUREMENT INFORMATION │
        │ BY THE ELECTRICAL DETECTOR AND HGB │
        │ DETECTOR OF THE FIRST MEASUREMENT UNIT │
        └──────────┬───────────┘
                   │          S103
        ┌──────────▼───────────┐
        │ ACQUISITION OF THE FIRST OPTICAL │
        │ INFORMATION BY THE OPTICAL DETECTOR OF │
        │ THE FIRST MEASUREMENT UNIT │
        └──────────┬───────────┘
                   │          S104
        ┌──────────▼───────────┐
        │ ANALYSIS OF MEASUREMENT INFORMATION │
        │ AND FIRST LIGHT INFORMATION │
        └──────────┬───────────┘
                   │          S105
        ┌──────────▼───────────┐
        │ GENERATION OF THE FIRST ANALYSIS │
        │            RESULT    │
        └──────────┬───────────┘
                   │
        ┌──────────▼───────────┐
        │        RETURN        │
        └──────────────────────┘
```

FIG. 16

CONTROLLER

```
┌─────────────────────────────┐
│   SECOND MEASUREMENT        │
│       PROCESS               │
└─────────────────────────────┘
              │
              │                    S201
              ▼
┌─────────────────────────────┐
│  SAMPLE PREPARATION BY THE SAMPLE  │
│ PREPARATOR OF THE SECOND MEASUREMENT │
│             UNIT            │
└─────────────────────────────┘
              │
              │                    S202
              ▼
┌─────────────────────────────┐
│  ACQUISITION OF THE SECOND OPTICAL  │
│ INFORMATION BY THE OPTICAL DETECTOR OF │
│   THE SECOND MEASUREMENT UNIT      │
└─────────────────────────────┘
              │
              │                    S203
              ▼
┌─────────────────────────────┐
│   ANALYSIS OF THE SECOND OPTICAL   │
│          INFORMATION        │
└─────────────────────────────┘
              │
              │                    S204
              ▼
┌─────────────────────────────┐
│  GENERATION OF THE SECOND ANALYSIS  │
│            RESULT           │
└─────────────────────────────┘
              │
              ▼
┌─────────────────────────────┐
│           RETURN            │
└─────────────────────────────┘
```

**FIG. 17**

COUNT VALUE — 310

ABNORMAL CELL FLAG — 320

**CBC** — 311

| ITEM | DATA | UNIT |
|------|------|------|
| WBC | | 10^3/μL |
| RBC | | 10^6/μL |
| HGB | | g/dL |
| HCT | | % |
| MCV | | fL |

**DIFF** — 312

| ITEM | DATA | UNIT |
|------|------|------|
| NEUT# | | 10^3/μL |
| LYMPH# | | 10^3/μL |
| MONO# | | 10^3/μL |
| EO# | | 10^3/μL |
| BASO# | | 10^3/μL |

**RET** — 313

| ITEM | DATA | UNIT |
|------|------|------|
| RET% | | % |
| RET# | | 10^6/μL |
| IRF | | % |
| RET-He | | Pg |

**PLT-F** — 314

| ITEM | DATA | UNIT |
|------|------|------|
| IPF | | % |

WHITE BLOOD CELL FLAG — 321a — 321

RED BLOOD CELL FLAG — 322

PLATELET FLAG — 323

EP 4 641 169 A1

# FIG. 18

300

## COUNT VALUE — 310

### CBC — 311

| ITEM | DATA | UNIT |
|------|------|------|
| WBC | ··· | 10^3/µL |
| RBC | ··· | 10^6/µL |
| HGB | ··· | g/dL |
| HCT | ··· | % |
| MCV | ··· | fL |

### DIFF — 312

| ITEM | DATA | UNIT |
|------|------|------|
| NEUT# | ··· | 10^3/µL |
| LYMPH# | ··· | 10^3/µL |
| MONO# | ··· | 10^3/µL |
| EO# | ··· | 10^3/µL |
| BASO# | ··· | 10^3/µL |

### RET — 313

| ITEM | DATA | UNIT |
|------|------|------|
| RET% | ··· | % |
| RET# | ··· | 10^6/µL |
| IRF | ··· | % |
| RET-He | ··· | Pg |

### PLT-F — 314

| ITEM | DATA | UNIT |
|------|------|------|
| IPF | ··· | % |

## ABNORMAL CELL FLAG — 320

WHITE BLOOD CELL FLAG   [ 1 ] — 321a

— 321

RED BLOOD CELL FLAG

— 322

PLATELET FLAG

— 323

EP 4 641 169 A1

FIG. 19   IF THE SECOND MEASUREMENT PROCESS IS PERFORMED

┌─ 300

┌─ 310

**COUNT VALUE**

CBC ── 311

| ITEM | DATA | UNIT |
|------|------|------|
| WBC | ・・・ | 10^3/µL |
| RBC | ・・・ | 10^6/µL |
| HGB | ・・・ | g/dL |
| HCT | ・・・ | % |
| MCV | ・・・ | fL |

DIFF ── 312

| ITEM | DATA | UNIT |
|------|------|------|
| NEUT# | ・・・ | 10^3/µL |
| LYMPH# | ・・・ | 10^3/µL |
| MONO# | ・・・ | 10^3/µL |
| EO# | ・・・ | 10^3/µL |
| BASO# | ・・・ | 10^3/µL |

RET ── 313

| ITEM | DATA | UNIT |
|------|------|------|
| RET% | ・・・ | % |
| RET# | ・・・ | 10^6/µL |
| IRF | ・・・ | % |
| RET-He | ・・・ | Pg |

PLT-F ── 314

| ITEM | DATA | UNIT |
|------|------|------|
| IPF | ・・・ | % |

┌─ 320

**ABNORMAL CELL FLAG**

WHITE BLOOD CELL FLAG   [ 2 ] ── 321a

| Blasts? | ── 321 |

RED BLOOD CELL FLAG

| | ── 322 |

PLATELET FLAG

| | ── 323 |

EP 4 641 169 A1

# FIG. 20

EXAMPLE 1 OF ABNORMAL CELL FLAG DISPLAY

COMPARISON EXAMPLE — 321a

WHITE BLOOD CELL FLAG [ 1 ]

| Blasts? | — 321 |

SECOND ANALYSIS RESULT
「Blasts?」

EMBODIMENT 1 — 321a

WHITE BLOOD CELL FLAG [ 2 ]

| Blasts? | — 321 |

---

EXAMPLE 1 OF ABNORMAL CELL FLAG DISPLAY

COMPARISON EXAMPLE — 321a

WHITE BLOOD CELL FLAG [ 1 ]

| Blasts? | — 321 |

SECOND ANALYSIS RESULT
「Abn Lympho?」

EMBODIMENT 1 — 321a

WHITE BLOOD CELL FLAG [ 2 ]

| Abn Lympho? | — 321 |

---

EXAMPLE 1 OF ABNORMAL CELL FLAG DISPLAY

COMPARISON EXAMPLE — 321a

WHITE BLOOD CELL FLAG [ 1 ]

| Blasts? | — 321 |

SECOND ANALYSIS RESULT
NO ABNORMAL CELL FLAG

EMBODIMENT 1 — 321a

WHITE BLOOD CELL FLAG [ 2 ]

| | — 321 |

FIG. 21

CONTROLLER

```
        ( START )
            │
            ▼
    ╱─────────────────╲          S301
   ╱   BLOOD CELL       ╲
  ╱ CONCENTRATION BASED ON THE ╲
 ╱  FIRST ANALYSIS RESULT <     ╲──── NO ────┐
  ╲    THRESHOLD Tc?           ╱             │
   ╲                          ╱              │
    ╲────────────────────────╱               │
            │ YES                            │
            ▼          S302                   ▼          S303
┌─────────────────────────┐      ┌─────────────────────────┐
│ DETERMINE THE FLOW RATE OF THE │ DETERMINE THE FLOW RATE OF THE │
│ FLOW CELL IN THE SECOND        │ FLOW CELL IN THE SECOND        │
│ MEASUREMENT PROCESS TO THE FIRST│ MEASUREMENT PROCESS TO BE LESS │
│ FLOW RATE                       │ THAN THE FIRST FLOW RATE       │
└─────────────────────────┘      └─────────────────────────┘
            │                                │
            │◄───────────────────────────────┘
            ▼
        ( END )
```

# FIG. 22

## EXAMPLE OF SWITCHING FLOW IN TWO STAGES

## EXAMPLE OF CHANGING FLOW LINEARLY

FIG. 23

EXAMPLE OF MODIFICATION 1 OF EMBODIMENT 1

CONTROLLER

START

S11
FIRST MEASUREMENT PROCESS

S21
IS THE COUNT VALUE OUTSIDE THE PREDETERMINED NUMERICAL RANGE?

NO

YES

S13
SECOND MEASUREMENT PROCESS

S22
BASED ON THE FIRST ANALYSIS RESULT AND THE COUNT VALUES AND ABNORMAL FLAGS OF THE SECOND ANALYSIS RESULTS, GENERATE THE CELL ANALYSIS RESULTS

S15
GENERATE CELL ANALYSIS RESULTS BASED ON THE FIRST ANALYSIS RESULTS

S16
DISPLAY CELL ANALYSIS RESULTS

END

## FIG. 24

IF THE SECOND MEASUREMENT PROCESS IS PERFORMED

`300`

### COUNT VALUE `310`

**CBC** `311`

| ITEM | DATA | UNIT |
|------|------|------|
| WBC | ··· | 10^3/µL |
| RBC | ··· | 10^6/µL |
| HGB | ··· | g/dL |
| HCT | ··· | % |
| MCV | ··· | fL |

**DIFF** `312`  `312a` `2`

| ITEM | DATA | UNIT |
|------|------|------|
| NEUT# | ··· | 10^3/µL |
| LYMPH# | ··· | 10^3/µL |
| MONO# | ··· | 10^3/µL |
| EO# | ··· | 10^3/µL |
| BASO# | ··· | 10^3/µL |

**RET** `313`

| ITEM | DATA | UNIT |
|------|------|------|
| RET% | ··· | % |
| RET# | ··· | 10^6/µL |
| IRF | ··· | % |
| RET-He | ··· | Pg |

**PLT-F** `314`

| ITEM | DATA | UNIT |
|------|------|------|
| IPF | ··· | % |

### ABNORMAL CELL FLAG `320`

WHITE BLOOD CELL FLAG `321a` `2`

| Blasts? | `321` |
|---------|-------|

RED BLOOD CELL FLAG

| | `322` |
|---------|-------|

PLATELET FLAG

| | `323` |
|---------|-------|

EP 4 641 169 A1

# FIG. 25  IF THE SECOND MEASUREMENT PROCESS IS PERFORMED                    ~300

**MEASUREMENT PROCESS 1 (DIFF): LOW RELIABILITY** ~301

## COUNT VALUE ~310

### CBC ~311  [1] ~311a

| ITEM | DATA | UNIT |
|------|------|------|
| WBC | ··· | 10^3/μL |
| RBC | ··· | 10^6/μL |

### RET ~313  [1] ~313a

| ITEM | DATA | UNIT |
|------|------|------|
| RET% | ··· | % |
| RET# | ··· | 10^6/μL |

### PLT-F ~314  [1] ~314a

| ITEM | DATA | UNIT |
|------|------|------|
| IPF | ··· | % |

### DIFF ~312  [1] ~312a

| ITEM | DATA | UNIT |
|------|------|------|
| NEUT# | ··· | 10^3/μL |
| LYMPH# | ··· | 10^3/μL |
| MONO# | ··· | 10^3/μL |
| EO# | ··· | 10^3/μL |
| BASO# | ··· | 10^3/μL |

### DIFF ~315  [2] ~315a

| ITEM | DATA | UNIT |
|------|------|------|
| NEUT# | ··· | 10^3/μL |
| LYMPH# | ··· | 10^3/μL |
| MONO# | ··· | 10^3/μL |
| EO# | ··· | 10^3/μL |
| BASO# | ··· | 10^3/μL |

## ABNORMAL CELL FLAG ~320

### WHITE BLOOD CELL FLAG  [1] ~321a

Blasts? ~321

### RED BLOOD CELL FLAG  [1] ~322a

~322

### PLATELET FLAG  [1] ~323a

~323

### WHITE BLOOD CELL FLAG  [2] ~324a

Blasts? ~324

EP 4 641 169 A1

FIG. 26

EXAMPLE OF MODIFICATION 2 OF EMBODIMENT 1

CONTROLLER

START

S11
FIRST MEASUREMENT PROCESS

S12
DOES THE FIRST ANALYSIS RESULT CONTAIN ABNORMAL CELL FLAGS?

NO

YES

S13
SECOND MEASUREMENT PROCESS

S31
BASED ON THE RESULTS OF THE SECOND ANALYSIS, GENERATE CELL ANALYSIS RESULTS

S15
GENERATE CELL ANALYSIS RESULTS BASED ON THE FIRST ANALYSIS RESULTS

S16
DISPLAY CELL ANALYSIS RESULTS

END

# FIG. 27

IF THE SECOND MEASUREMENT PROCESS IS PERFORMED ⟋300

## 310

### COUNT VALUE

DIFF ⟋315 ⟋315a [2]

| ITEM | DATA | UNIT |
|---|---|---|
| NEUT# | ··· | 10^3/μL |
| LYMPH# | ··· | 10^3/μL |
| MONO# | ··· | 10^3/μL |
| EO# | ··· | 10^3/μL |
| BASO# | ··· | 10^3/μL |

## 320

### ABNORMAL CELL FLAG

WHITE BLOOD CELL FLAG ⟋324a [2]

Blasts? ⟋324

EP 4 641 169 A1

FIG. 28

EMBODIMENT 2

EP 4 641 169 A1

FIG. 29

FIG. 30

FIG. 31

FIG. 32

CONTROLLER

START

S11
FIRST MEASUREMENT PROCESS

S13
SECOND MEASUREMENT PROCESS

S12
DOES THE FIRST ANALYSIS RESULT CONTAIN ABNORMAL CELL FLAGS?

NO

YES

S14
BASED ON THE ABNORMAL CELL FLAGS FROM THE FIRST AND SECOND ANALYSIS RESULTS, GENERATE THE CELL ANALYSIS RESULTS

S15
GENERATE CELL ANALYSIS RESULTS BASED ON THE FIRST ANALYSIS RESULTS

S16
DISPLAY CELL ANALYSIS RESULTS

END

FIG. 33

EXAMPLE OF MODIFICATION 1
OF EMBODIMENT 2

CONTROLLER

```
            ( START )
               │
               ▼                          S11
  ┌──┬────────────────────────────┬──┐
  │  │  FIRST MEASUREMENT PROCESS  │  │
  └──┴────────────────────────────┴──┘
               │
               ▼                          S13
  ┌──┬────────────────────────────┬──┐
  │  │ SECOND MEASUREMENT PROCESS  │  │
  └──┴────────────────────────────┴──┘
               │
               ▼                          S41
  ┌───────────────────────────────────┐
  │ BASED ON THE RESULTS OF THE SECOND│
  │ ANALYSIS, GENERATE CELL ANALYSIS  │
  │            RESULTS                │
  └───────────────────────────────────┘
               │
               ▼                          S42
  ┌───────────────────────────────────┐
  │DISPLAY THE CELL ANALYSIS RESULTS AND│
  │ SHOW THE FIRST ANALYSIS RESULTS AS │
  │       REFERENCE INFORMATION        │
  └───────────────────────────────────┘
               │
               ▼
            (  END  )
```

# FIG. 34

EXAMPLE OF MODIFICATION 2 OF EMBODIMENT 2

# FIG. 35

EMBODIMENT 3

THE RELATIONSHIP BETWEEN THE RECONSTRUCTION AREA
AND THE SECOND ILLUMINATION LIGHT

GENERATION OF RECONSTRUCTED IMAGES USING INVERSE MATRICES

COMPRESSED SENSING

FIG. 36

Europäisches
Patentamt

European
Patent Office

Office européen
des brevets

# EUROPEAN SEARCH REPORT

**Application Number**

EP 25 17 1584

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 467 806 B1 (BIO RAD LABORATORIES [US]) 19 May 2021 (2021-05-19) | 1-3,5-7, 11-14 | INV. G01N15/1429 |
| A | * paragraphs [0029] - [0030] * <br> * figures 7-8 * | 8-10,15 | G01N15/1434 <br> G01N15/14 <br> G01N15/149 |
| X | US 2016/282264 A1 (WAGNER MATTHIAS [US]) 29 September 2016 (2016-09-29) <br> * paragraph [0235] * <br> * figures 2, 4 * | 1,4 | G01N15/10 |
| X | US 2005/105077 A1 (PADMANABHAN ARAVIND [US] ET AL) 19 May 2005 (2005-05-19) <br> * figures 22, 26, 28 * | 1 | |
| A | EP 2 237 019 B1 (SYSMEX CORP [JP]) 27 April 2016 (2016-04-27) <br> * the whole document * | 1-15 | |
| A | US 2023/221237 A1 (KADUCHAK GREGORY [US] ET AL) 13 July 2023 (2023-07-13) <br> * the whole document * | 1-15 | |
| A | US 2021/402395 A1 (WU GEORGE GUIKAI [US] ET AL) 30 December 2021 (2021-12-30) <br> * the whole document * | 1-15 | **TECHNICAL FIELDS SEARCHED (IPC)** <br> G01N |
| A | US 2023/012588 A1 (IMAI TORU [JP] ET AL) 19 January 2023 (2023-01-19) <br> * the whole document * | 1-15 | |

The present search report has been drawn up for all claims

| Place of search | Date of completion of the search | Examiner |
|---|---|---|
| The Hague | 22 August 2025 | Sánchez Rivas, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 4 641 169 A1**

## ANNEX TO THE EUROPEAN SEARCH REPORT
## ON EUROPEAN PATENT APPLICATION NO.

EP 25 17 1584

22-08-2025

| Patent document cited in search report | | Publication date | Patent family member(s) | | Publication date |
|---|---|---|---|---|---|
| EP 2467806 | B1 | 19-05-2021 | CA | 2771324 A1 | 24-02-2011 |
| | | | EP | 2467806 A1 | 27-06-2012 |
| | | | JP | 5681188 B2 | 04-03-2015 |
| | | | JP | 2013502590 A | 24-01-2013 |
| | | | US | 2011204256 A1 | 25-08-2011 |
| | | | WO | 2011022686 A1 | 24-02-2011 |
| US 2016282264 | A1 | 29-09-2016 | US | 2012225475 A1 | 06-09-2012 |
| | | | US | 2013252237 A1 | 26-09-2013 |
| | | | US | 2016282264 A1 | 29-09-2016 |
| US 2005105077 | A1 | 19-05-2005 | US | 2005105077 A1 | 19-05-2005 |
| | | | US | 2005122522 A1 | 09-06-2005 |
| | | | US | 2010014068 A1 | 21-01-2010 |
| EP 2237019 | B1 | 27-04-2016 | CN | 101852733 A | 06-10-2010 |
| | | | EP | 2237019 A2 | 06-10-2010 |
| | | | JP | 5452058 B2 | 26-03-2014 |
| | | | JP | 2010237147 A | 21-10-2010 |
| | | | US | 2010248247 A1 | 30-09-2010 |
| US 2023221237 | A1 | 13-07-2023 | CN | 110573858 A | 13-12-2019 |
| | | | CN | 115931687 A | 07-04-2023 |
| | | | EP | 3602003 A1 | 05-02-2020 |
| | | | JP | 7187474 B2 | 12-12-2022 |
| | | | JP | 7464685 B2 | 09-04-2024 |
| | | | JP | 2020513103 A | 30-04-2020 |
| | | | JP | 2023036596 A | 14-03-2023 |
| | | | JP | 2024073425 A | 29-05-2024 |
| | | | KR | 20190135012 A | 05-12-2019 |
| | | | SG | 11201908847T A | 30-10-2019 |
| | | | US | 2018284009 A1 | 04-10-2018 |
| | | | US | 2019301997 A1 | 03-10-2019 |
| | | | US | 2020141860 A1 | 07-05-2020 |
| | | | US | 2021364411 A1 | 25-11-2021 |
| | | | US | 2023131332 A1 | 27-04-2023 |
| | | | US | 2023221237 A1 | 13-07-2023 |
| | | | US | 2023417649 A1 | 28-12-2023 |
| | | | US | 2023417650 A1 | 28-12-2023 |
| | | | US | 2024344963 A1 | 17-10-2024 |
| | | | US | 2025244226 A1 | 31-07-2025 |
| | | | WO | 2018183939 A1 | 04-10-2018 |
| US 2021402395 | A1 | 30-12-2021 | CA | 3141069 A1 | 03-12-2020 |
| | | | CN | 114207407 A | 18-03-2022 |
| | | | EP | 3976813 A1 | 06-04-2022 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 25 17 1584

22-08-2025

| Patent document cited in search report | Publication date | Patent family member(s) | | Publication date |
|---|---|---|---|---|
| | | JP | 2022535036 A | 04-08-2022 |
| | | US | 2020376488 A1 | 03-12-2020 |
| | | US | 2021114035 A1 | 22-04-2021 |
| | | US | 2021402395 A1 | 30-12-2021 |
| | | WO | 2020243581 A1 | 03-12-2020 |
| US 2023012588 A1 | 19-01-2023 | JP | WO2021200960 A1 | 07-10-2021 |
| | | US | 2023012588 A1 | 19-01-2023 |
| | | WO | 2021200960 A1 | 07-10-2021 |

EPO FORM P0459

page 2 of 2

**REFERENCES CITED IN THE DESCRIPTION**

**Patent documents cited in the description**

- JP 2024073126 A
- US 20210164885
- US 9477018 B